(19) Europäisches Patentamt

European Patent Office

Office européen des brevets

(11) **EP 3 677 408 B1**

(12) # EUROPEAN PATENT SPECIFICATION

(45) Date of publication and mention of the grant of the patent:
**24.01.2024 Bulletin 2024/04**

(21) Application number: **18851516.7**

(22) Date of filing: **11.07.2018**

(51) International Patent Classification (IPC):
**B29C 64/30** (2017.01)    **B33Y 10/00** (2015.01)
**B33Y 30/00** (2015.01)    **B29C 64/10** (2017.01)
**B29C 64/188** (2017.01)    **B33Y 40/00** (2020.01)
**B33Y 80/00** (2015.01)    **G02B 1/00** (2006.01)
**G02B 5/00** (2006.01)    **G02B 6/00** (2006.01)
**G02F 1/00** (2006.01)

(52) Cooperative Patent Classification (CPC):
**B29C 64/188; B29C 64/30; B33Y 10/00;**
**B33Y 40/00; B33Y 80/00;** B29C 64/205;
B33Y 30/00

(86) International application number:
**PCT/JP2018/026173**

(87) International publication number:
**WO 2019/044192 (07.03.2019 Gazette 2019/10)**

(54) **THREE-DIMENSIONAL STRUCTURE MANUFACTURING METHOD AND THREE-DIMENSIONAL STRUCTURE**

VERFAHREN ZUR HERSTELLUNG EINER DREIDIMENSIONALEN STRUKTUR UND DREIDIMENSIONALE STRUKTUR

PROCÉDÉ DE FABRICATION DE STRUCTURE TRIDIMENSIONNELLE ET STRUCTURE TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2017 JP 2017168063**

(43) Date of publication of application:
**08.07.2020 Bulletin 2020/28**

(73) Proprietor: **Sony Group Corporation**
**Tokyo 108-0075 (JP)**

(72) Inventor: **SUWA Shunichi**
**Tokyo 141-0022 (JP)**

(74) Representative: **D Young & Co LLP**
**120 Holborn**
**London EC1N 2DY (GB)**

(56) References cited:
EP-A2- 3 145 859        EP-B1- 3 145 859
JP-A- 2006 505 810    JP-A- 2015 145 449
JP-A- 2017 523 594    US-A- 5 917 980
US-A1- 2004 149 684

**Description**

[Technical Field]

The present technology relates to a three-dimensional structure manufacturing method and a three-dimensional structure.

[Background Art]

In recent years, various materials have been proposed and commercialized for 3D printers. While the materials are normally organic materials (polymer resins), inorganic materials (glass) and metallic materials have been also proposed.

There is proposed, for example, a compound resin material which contains a plurality of types of resin materials and in which first layers and second layers are repeatedly disposed in a buildup direction (refer to PTL 1).

[Citation List]

[Patent Literature]

[PTL 1]
Japanese Patent Laid-Open No. 2017-25187

JP 2015-145449 A aims to provide a manufacturing method of a photoresponsive crosslinking-type liquid crystal polymeric film capable of continuously manufacturing a film having a large area while eliminating complexity in manufacturing and achieving excellent control of film thickness easily in a short time, as well as achieving a thick film while preventing white turbidness of the film to obtain excellent photoresponsivity, and discloses a manufacturing method of a photoresponsive crosslinking-type liquid crystal polymeric film includes: a step of repeating application of a photopolymerizable monomer solution at least including a polyfunctional liquid crystal monomer, a monofunctional liquid crystal monomer, a polyfunctional photoresponsive monomer, a photoinitiator and a solvent onto an oriented film, by a wet coating method, and then removing of the solvent to form at least two layers of photopolymerizable films; and a step of irradiating the at least two layers of photopolymerizable films with light under non-oxygen atmosphere to copolymerize the photopolymerizable monomer and to form a film.

US 2004/149684 A1 provides a method for manufacturing an optical compensation film and the device thereof. The method includes steps as follows. First, a horizontal condensing electric field orientation layer along an x-axis is formed by exposing a first linear photo reactive polymer layer on a first substrate under a transmissive polarized-light UV. Secondly, a first optical anisotropy film having the x-axis optic axis is formed on the horizontal condensing electric field orientation layer. Thirdly, a vertical condensing electric field orientation layer along a y-axis is formed on the first optical anisotropy film by exposing a second linear photo reactive polymer layer under a reflective polarized-light UV. Fourthly, a second optical anisotropy film having the y-axis optic axis is formed on the vertical condensing electric field orientation layer. Thereby, an optical compensation film with double optical-axes is formed.

US 5,917,980 A discloses an optical circuit device manufactured by forming an organic film formed on a substrate, and giving this organic film non-linear optical properties. An optical circuit device is formed containing an organic film formed on a substrate, wherein said film is either selectively formed on a portion of the region on a substrate or said film being formed over the entire region on a substrate, and a portion of a region of that film is either selectively formed to a thickness differing from other regions or selectively having a different structure. This optical circuit device can be manufactured to have various constitutions, and allows the formation of a multilayer optical circuit.

[Summary]

[Technical Problem]

However, the technology proposed in PTL 1 is possibly incapable of freely controlling physical properties of a three-dimensional structure.

The present technology has been achieved in the light of such circumstances, and a main object of the present technology is to provide a three-dimensional structure manufacturing method and a manufacturing apparatus for manufacturing a three-dimensional structure capable of freely controlling physical properties of a three-dimensional structure and a three-dimensional structure the physical properties of which are freely controlled.

[Solution to Problem]

As a result of dedicated study for attaining the object, the inventor of the present technology has been able to successfully, freely control physical properties of a three-dimensional structure and finally completed the present technology.

The invention is set out in the appended set of The method according to the invention is defined claims. in claim 1 and the structure according to the claimed invention is defined in claim 5.

In other words, according to a first aspect not according to the claimed invention, a three-dimensional structure manufacturing method includes: forming a layer containing at least one type of chemical substance; and orienting molecules of the at least one type of chemical substance, the forming the layer and the orienting the molecules being repeated a plurality of times.

In the three-dimensional structure manufacturing method according to the first aspect of the present technology, the molecules may be oriented after the forming the layer is repeated a plurality of times.

According to a second aspect of the present technology, a three-dimensional structure manufacturing method includes among others: forming an orientation film; forming a layer containing at least one type of chemical substance; and orienting molecules of the at least one type of chemical substance.

In the three-dimensional structure manufacturing method according to the second aspect of the present technology, the molecules may be oriented after the forming the layer is repeated a plurality of times.

In the three-dimensional structure manufacturing method according to the second aspect of the present technology, the forming the orientation film, the forming the layer, and the orienting the molecules are repeated a plurality of times.

In the three-dimensional structure manufacturing method according to the second aspect of the present technology, the forming the layer and the orienting the molecules may be repeated a plurality of times.

In the three-dimensional structure manufacturing method according to the second aspect of the present technology, the orientation film may be formed after the forming the layer and the orienting the molecules are repeated a plurality of times.

According to a third aspect not according to the claimed invention, a three-dimensional structure manufacturing method includes: forming an orientation film; and forming a layer containing at least one type of chemical substance.

In the three-dimensional structure manufacturing method according to the third aspect of the present technology, the forming the layer may be repeated a plurality of times after the forming the orientation film.

In the three-dimensional structure manufacturing method according to the third aspect of the present technology, the forming the orientation film and the forming the layer may be repeated a plurality of times.

In the three-dimensional structure manufacturing method according to the third aspect of the present technology, the orientation film may be formed after the forming the layer is repeated a plurality of times.

In the three-dimensional structure manufacturing method according to each of the second and third aspects of the present technology, an orientation process may be performed on the formed orientation film.

In the three-dimensional structure manufacturing method according to each of the first and third aspects of the present technology, the at least one type of chemical substance may contain molecules each having a chiral molecular skeleton. In the three-dimensional structure manufacturing method according to the second aspect of the present technology, the at least one type of chemical substance contains molecules each having a chiral molecular skeleton.

According to a fourth aspect not according to the claimed invention, there is provided a three-dimensional structure obtained by the three-dimensional structure manufacturing method according to the first aspect of the present technology and containing a chemical substance having anisotropy.

According to a fifth aspect of the present technology, there is provided a three-dimensional structure obtained by the three-dimensional structure manufacturing method according to the second aspect of the present technology and containing a chemical substance having anisotropy.

According to a sixth aspect not according to the claimed invention, there is provided a three-dimensional structure obtained by the three-dimensional structure manufacturing method according to the third aspect of the present technology and containing a chemical substance having at least one type of anisotropy.

In the three-dimensional structure according to each of the fourth, fifth, and sixth aspects of the present technology, the chemical substance having the anisotropy contains molecules each having a chiral molecular skeleton.

According to a seventh aspect not according to the claimed invention a manufacturing apparatus for manufacturing a three-dimensional structure includes at least a layer forming section that forms a layer containing at least one type of chemical substance.

The manufacturing apparatus for manufacturing the three-dimensional structure according to the seventh aspect not according to the claimed invention may further include an orientation film forming section that forms an orientation film.

Furthermore, the manufacturing apparatus for manufacturing the three-dimensional structure according to the seventh aspect of the present technology may further include a molecular orientation section that orients molecules of the at least one type of chemical substance.

Moreover, the manufacturing apparatus for manufacturing the three-dimensional structure according to the seventh aspect of the present technology may further include: an orientation film forming section that forms an orientation film; and a molecular orientation section that orients molecules of the at least one type of chemical substance.

[Advantageous Effect of Invention]

According to the present technology, it is possible to freely control physical properties of a three-dimensional structure. It is noted that advantages are not always limited to those described herein and may be any of the advantages described in the present disclosure.

[Brief Description of Drawings]

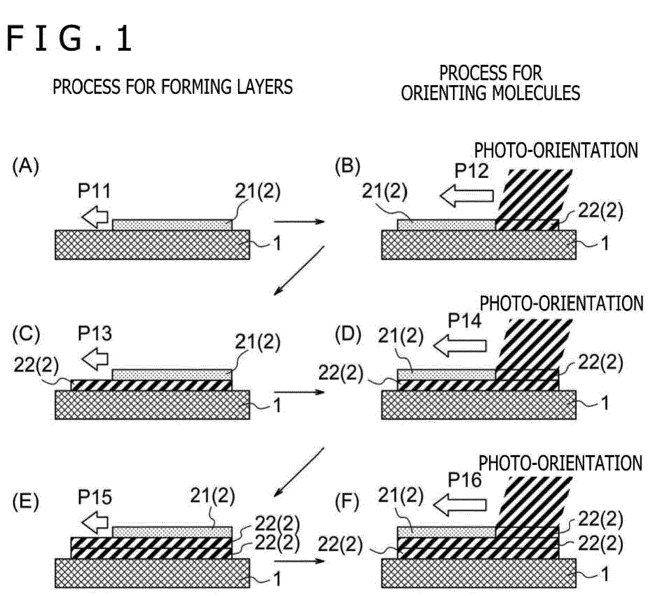

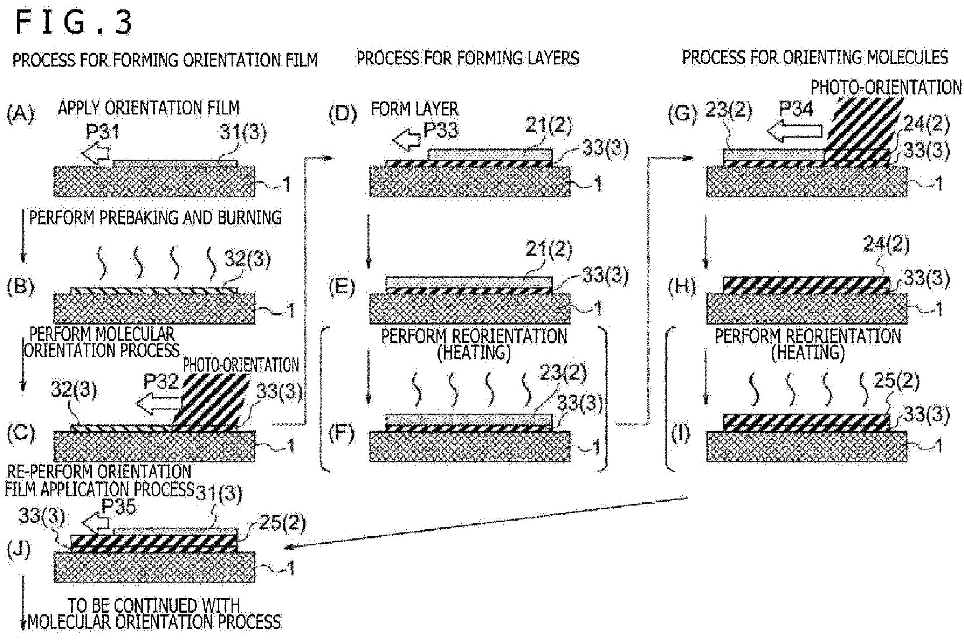

Figures 3, 7-12, 15-17, 20 and 21 are according to the claimed invention. Figures 1, 2, 4-6,13, 14, 18, 19 and 22-26 do not form part of the claimed invention.

[FIG. 1]
FIG. 1 depicts explanatory diagrams of a three-dimensional structure manufacturing method of alternately forming a layer and orienting molecules.
[FIG. 2]

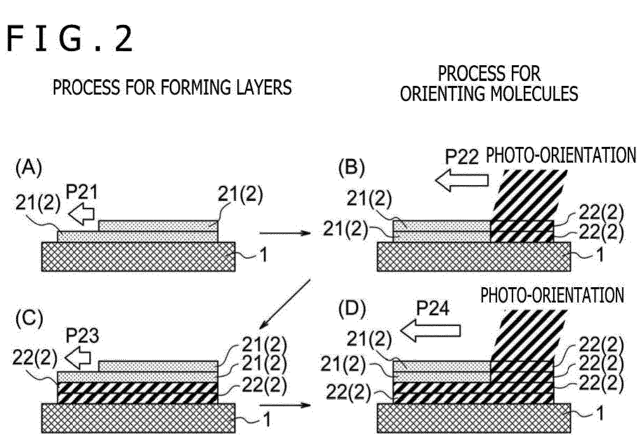

FIG. 2 depicts explanatory diagrams of a three-dimensional structure manufacturing method of alternately forming a plurality of layers by repeatedly forming a layer a plurality of times, and orienting molecules.
[FIG. 3]
FIG. 3 depicts explanatory diagrams of a three-dimensional structure manufacturing method of forming an orientation film (including performing an orientation process on the formed orientation film), forming a layer, and orienting molecules in this order.
[FIG. 4]

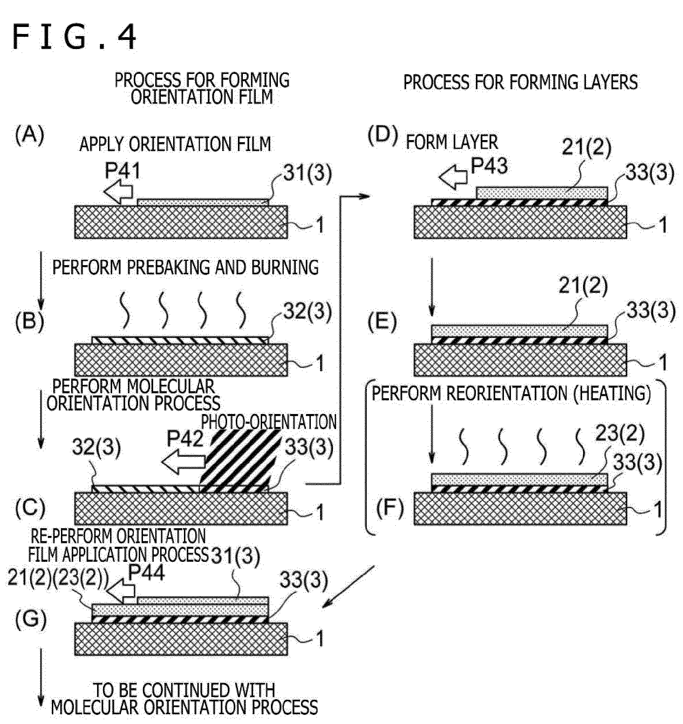

FIG. 4 depicts explanatory diagrams of a three-dimensional structure manufacturing method of alternately forming an orientation film (including performing an orientation process on the formed orientation film), and forming a layer.
[FIG. 5]

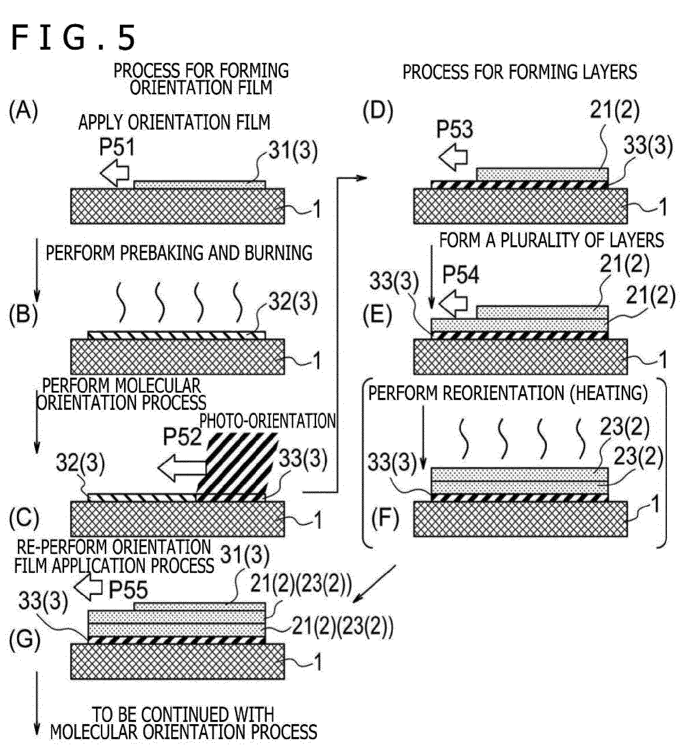

FIG. 5 depicts explanatory diagrams of a three-dimensional structure manufacturing method of alternately forming an orientation film (including performing an orientation process on the formed orientation film), and forming a plurality of layers by repeatedly forming a layer a plurality of times.
[FIG. 6]

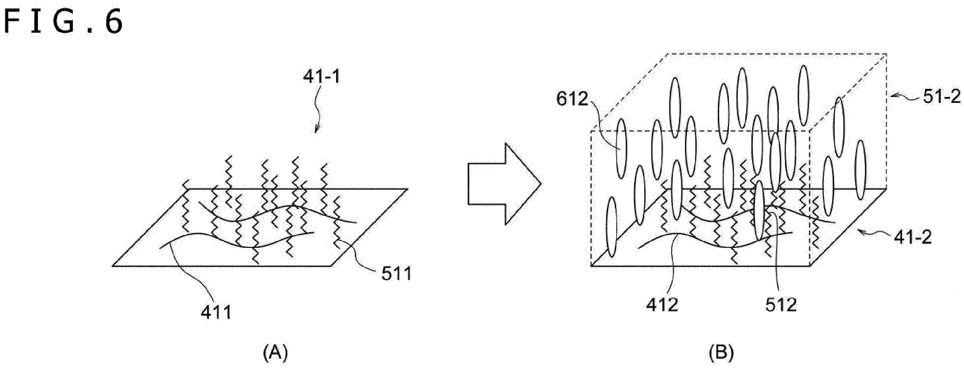

FIG. 6 depicts diagrams for explaining that molecules can be oriented without performing an orientation process on an orientation film in a first example according to the present technology.
[FIG. 7]

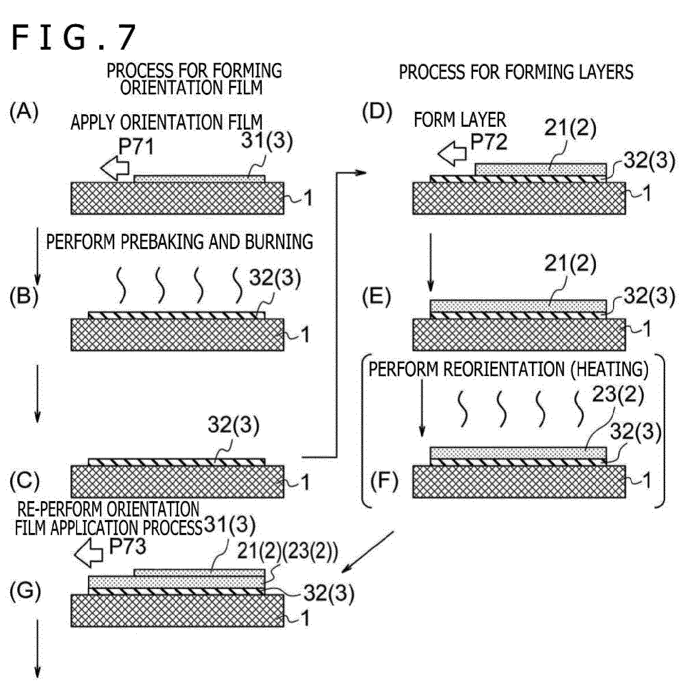

FIG. 7 depicts explanatory diagrams of a three-dimensional structure manufacturing method in the first example according to the present technology.
[FIG. 8]

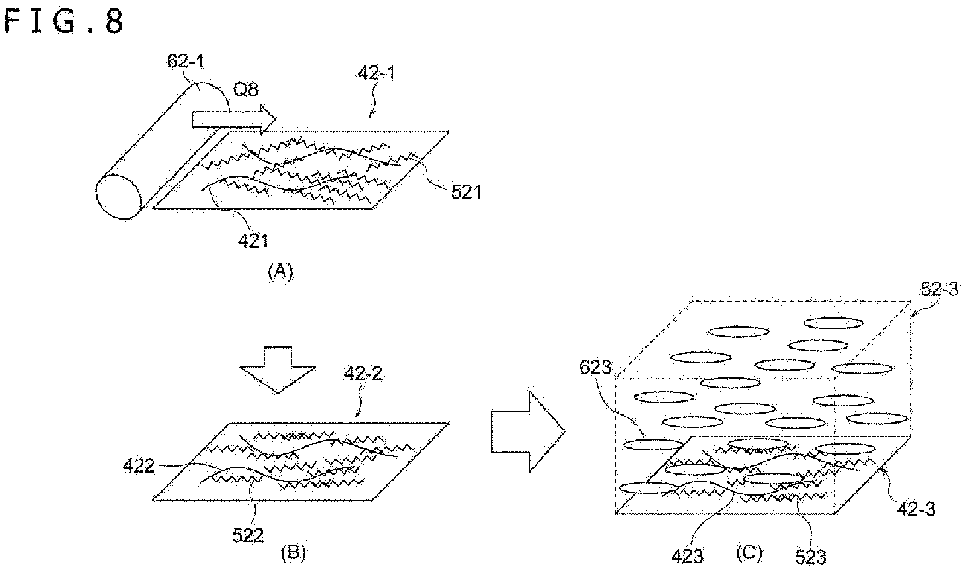

FIG. 8 depicts diagrams for explaining that an orientation process is performed on an orientation film and molecules contained in the layer can be oriented in a second example according to the present technology.
[FIG. 9]

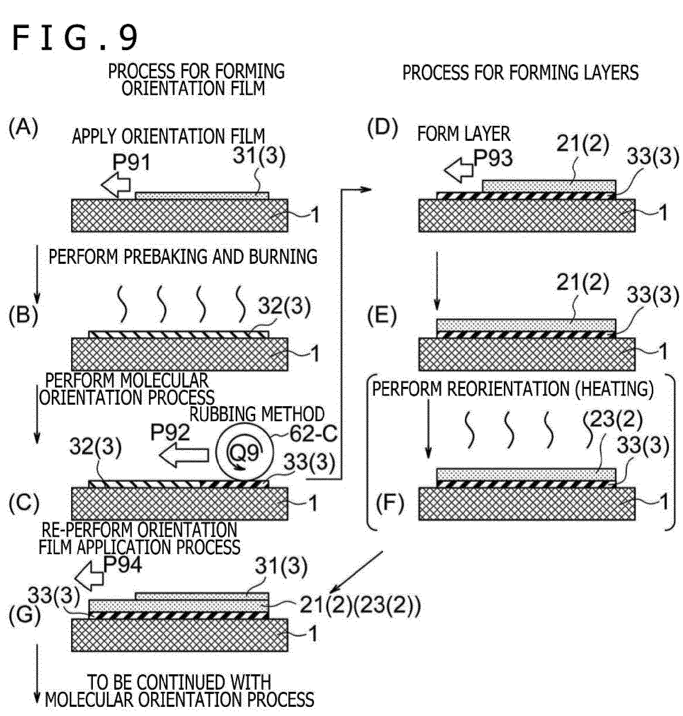

FIG. 9 depicts explanatory diagrams of a three-dimensional structure manufacturing method in the second example according to the present technology.
[FIG. 10]

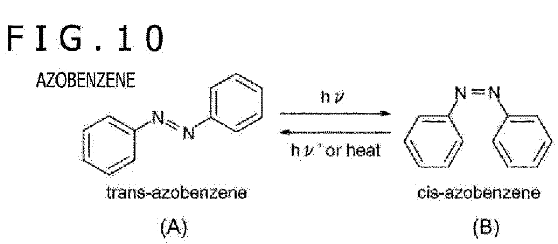

FIG. 10 depicts diagrams depicting a structural change of azobenzene accompanying light irradiation or heat.
[FIG. 11]

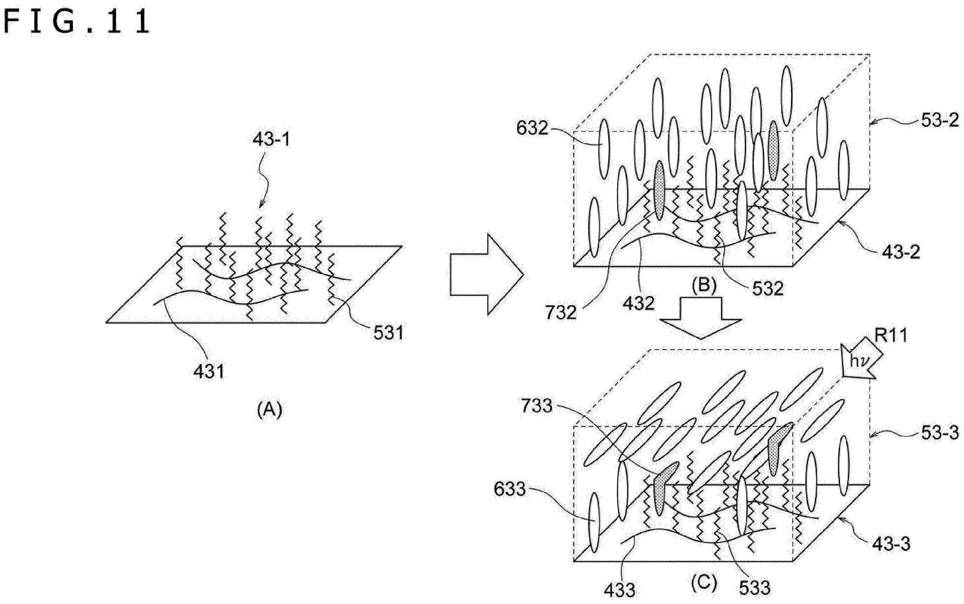

FIG. 11 depicts diagrams for explaining that molecules contained in a layer are oriented without performing an orientation process on an orientation film and molecules can be further oriented through orientation of the molecules in a third example according to the present technology.
[FIG. 12]

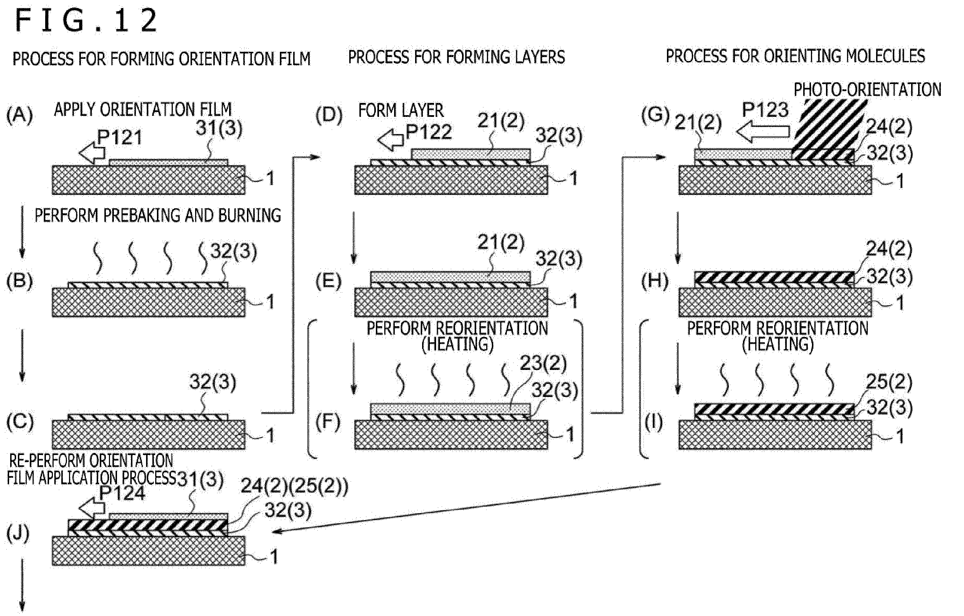

FIG. 12 depicts explanatory diagrams of a three-dimensional structure manufacturing method in the third example according to the present technology.
[FIG. 13]

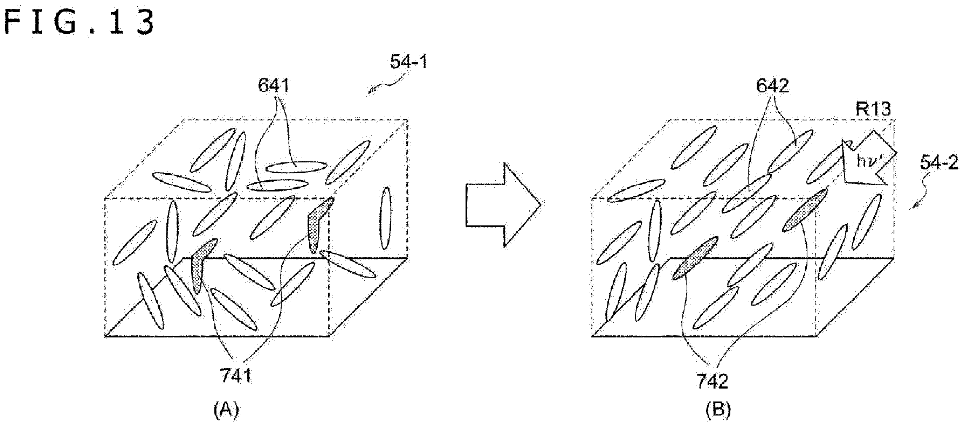

FIG. 13 depicts diagrams for explaining that molecules contained in a layer can be oriented through orientation of the molecules in a fourth example according to the present technology.
[FIG. 14]

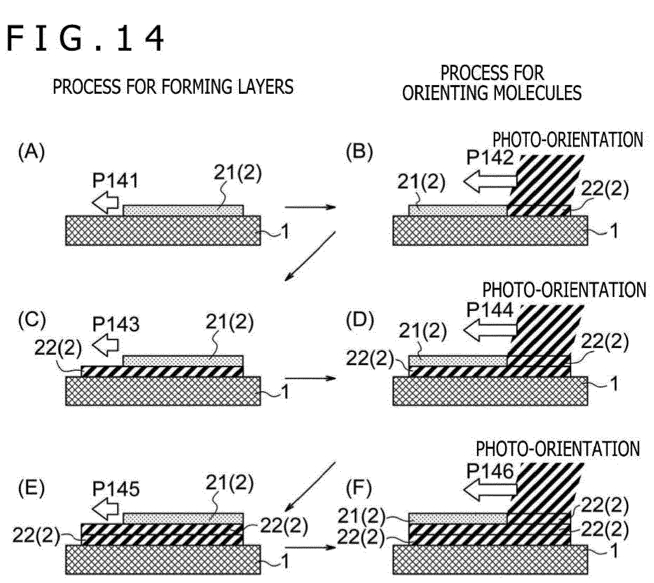

FIG. 14 depicts explanatory diagrams of a three-dimensional structure manufacturing method in the fourth example according to the present technology.

[FIG. 15]

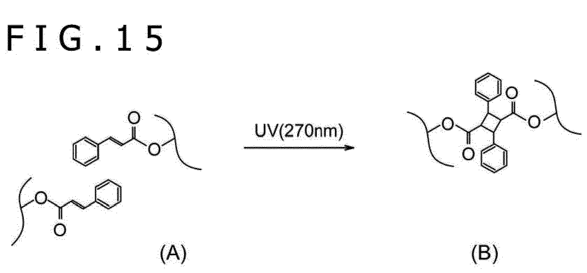

FIG. 15 depicts diagrams depicting a crosslinking reaction of a compound (polyvinyl cinnamate) having a cross-linkable functional group by UV light.

[FIG. 16]

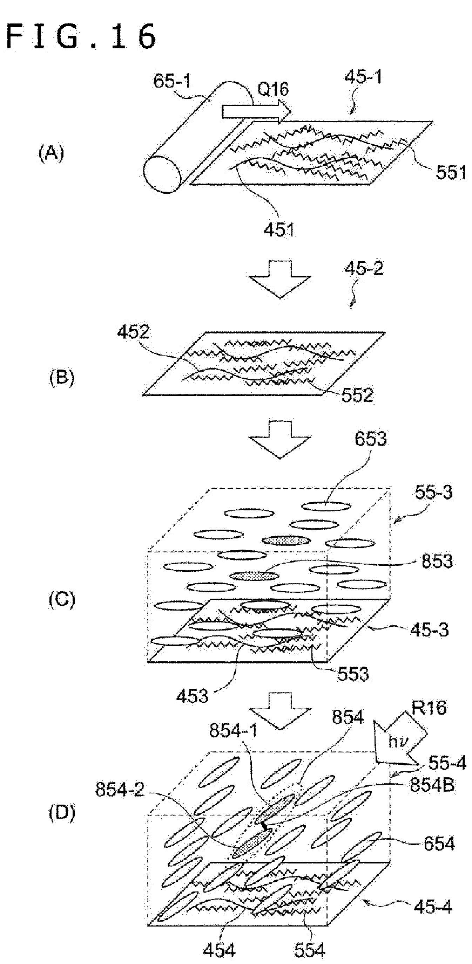

FIG. 16 depicts diagrams for explaining that molecules contained in a layer are oriented by performing an orientation process on an orientation film and molecules can be further oriented through orientation of the molecules in a fifth example according to the present technology.

[FIG. 17]

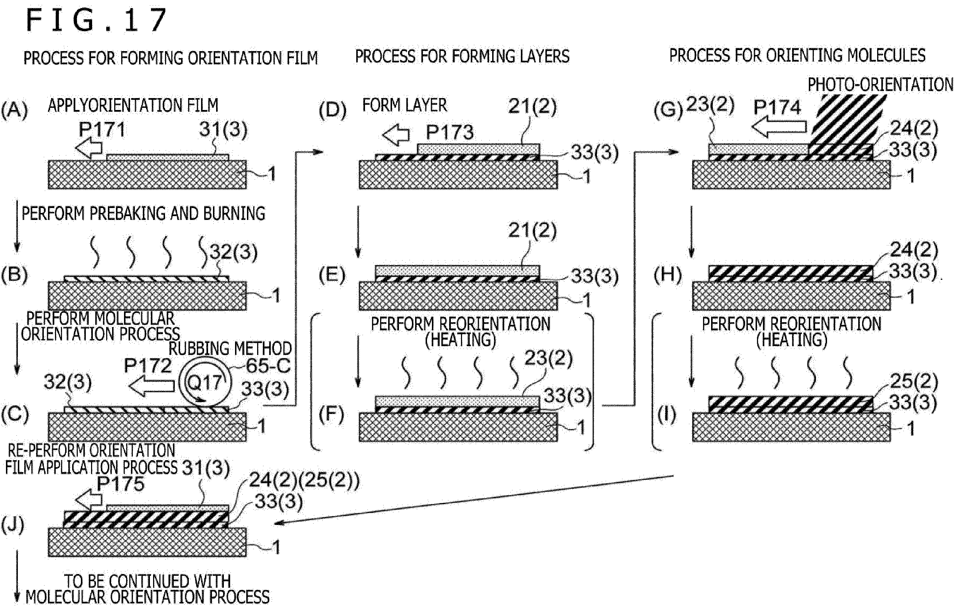

FIG. 17 depicts explanatory diagrams of a three-dimensional structure manufacturing method in the fifth example according to the present technology.

[FIG. 18]

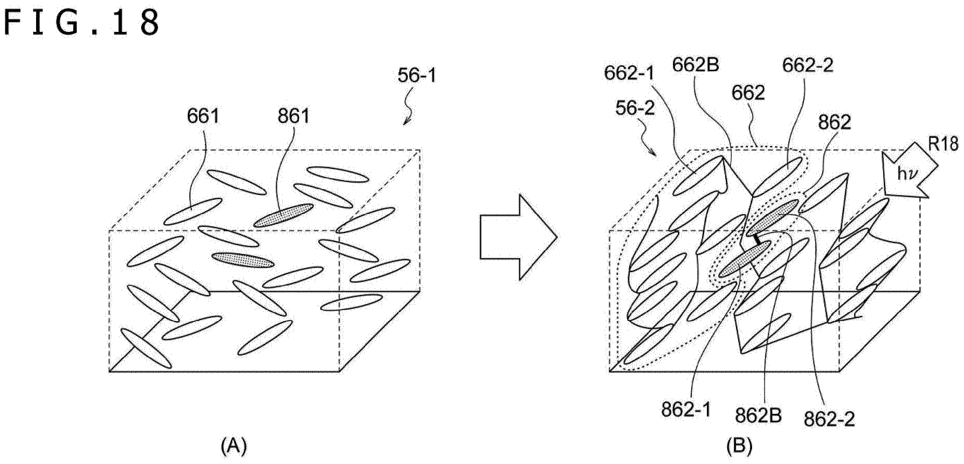

FIG. 18 depicts diagrams for explaining that molecules contained in a layer can be oriented through orientation of the molecules in a sixth example according to the present technology.

[FIG. 19]

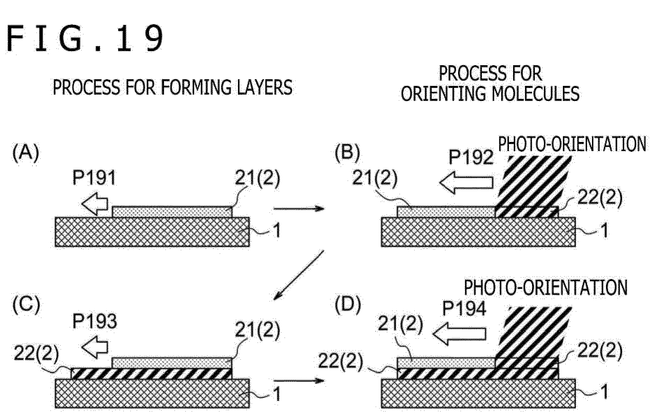

FIG. 19 depicts explanatory diagrams of a three-dimensional structure manufacturing method in the sixth example according to the present technology.

[FIG. 20]

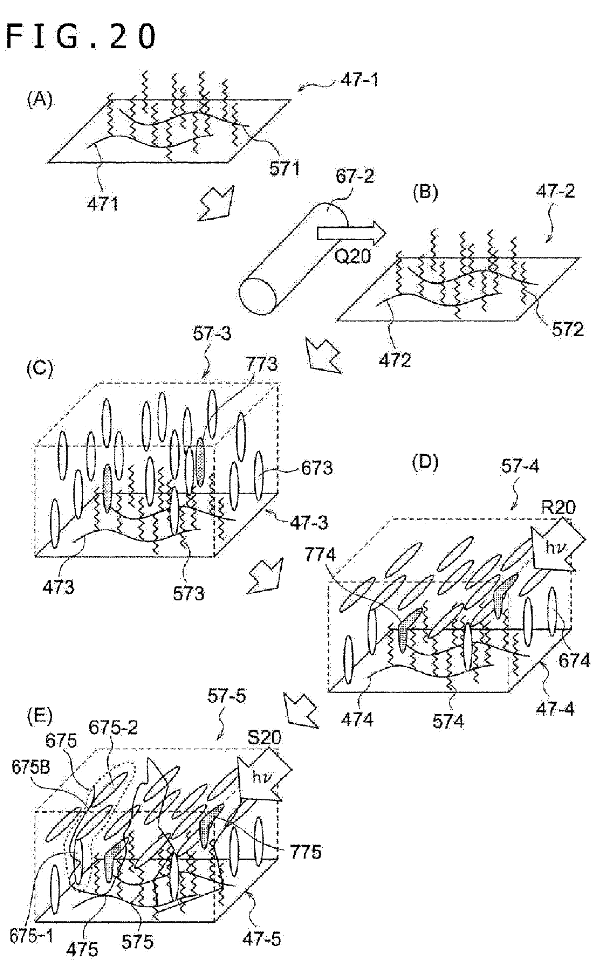

FIG. 20 depicts diagrams for explaining that molecules contained in a layer are oriented by performing an orientation process on an orientation film and molecules can be further oriented through orientation of the molecules in a seventh example according to the present technology.

[FIG. 21]

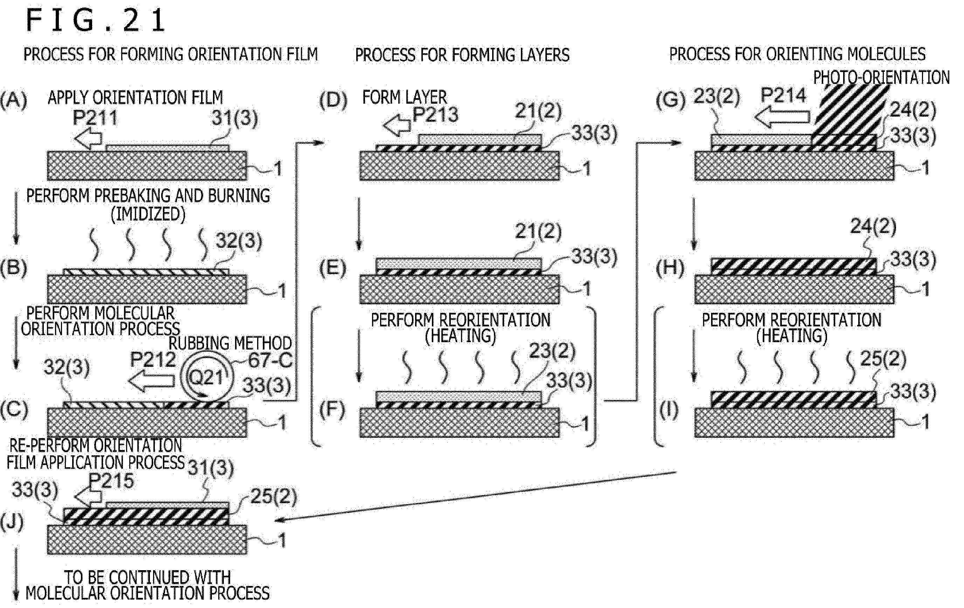

FIG. 21 depicts explanatory diagrams of a three-dimensional structure manufacturing method in the seventh example according to the present technology.

[FIG. 22]

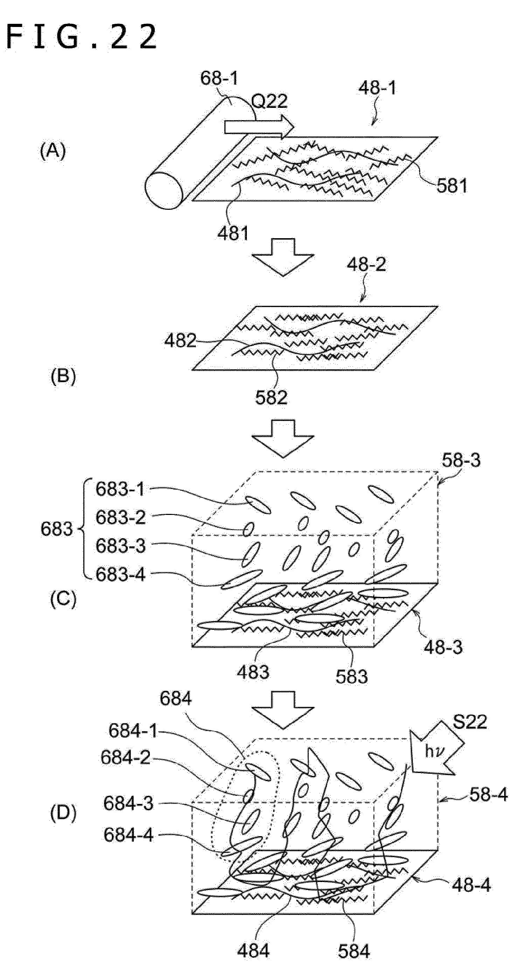

FIG. 22 depicts diagrams for explaining that an orientation process is performed on an orientation film and molecules contained in a layer can be oriented in an eighth example according to the present technology.

[FIG. 23]

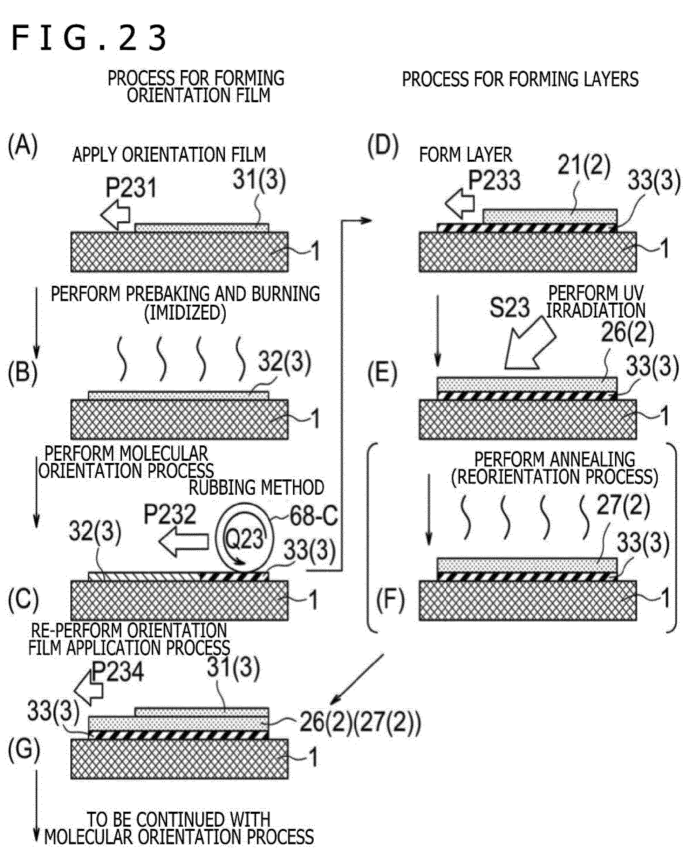

FIG. 23 depicts explanatory diagrams of a three-dimensional structure manufacturing method in the eighth example according to the present technology.

[FIG. 24]

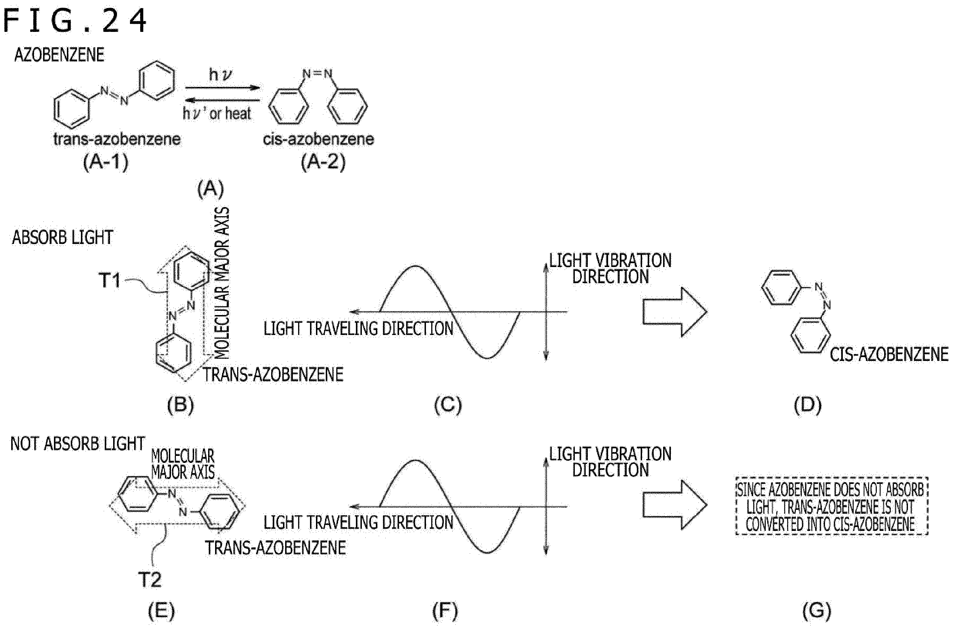

FIG. 24 depicts explanatory diagrams of cis-trans conversion of azobenzene.

[FIG. 25]

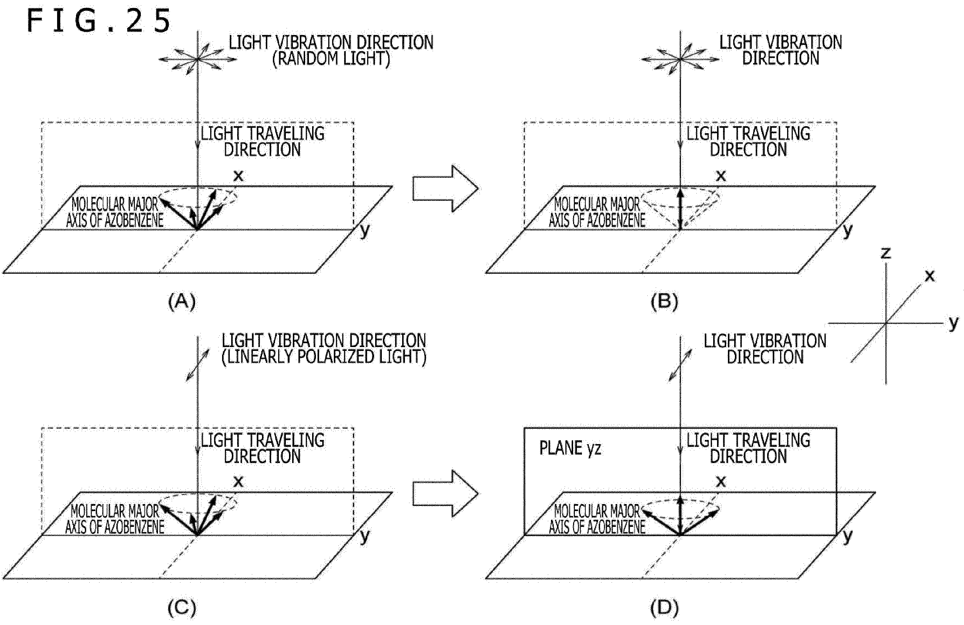

FIG. 25 depicts explanatory diagrams of directionality of a molecular major axis of azobenzene in a case of vertical incidence of light.

[FIG. 26]

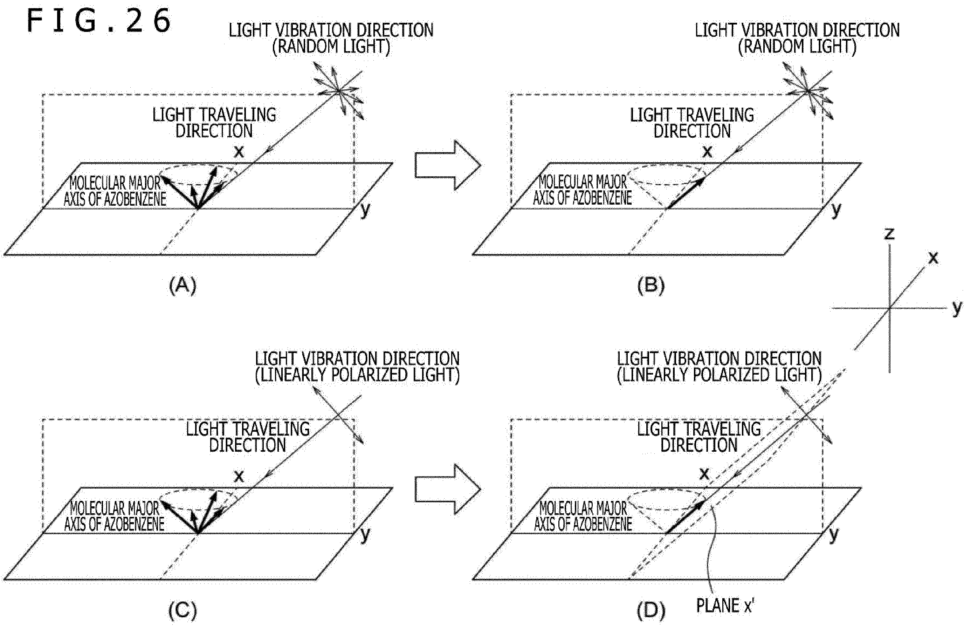

FIG. 26 depicts explanatory diagrams of the directionality of the molecular major axis of azobenzene in a case of oblique incidence of light.

[Description of Embodiments]

Preferred embodiments of the present technology will be described hereinafter. The embodiments described hereinafter are an example of representative embodiments of the present technology and a scope of the present technology is not interpreted as being narrow by the embodiments. Same or similar elements or members are denoted by the same reference signs in the drawings and repetitive description thereof is often omitted.

It is noted that description will be given in the following order.

1. Outline of Present Technology

2. First Embodiment not according to the claimed invention (Example 1 of Three-Dimensional Structure Manufacturing Method not according to the claimed invention>

3. Second Embodiment not according to the claimed invention (Example 2 of Three-Dimensional Structure Manufacturing Method not according to the claimed invention>

4. Third Embodiment (Example 3 of Three-Dimensional Structure Manufacturing Method)

5. Fourth Embodiment not according to the claimed invention (Example 1 of Three-Dimensional Structure not according to the claimed invention>

6. Fifth Embodiment (Example 2 of Three-Dimensional Structure)

7. Sixth Embodiment not according to the claimed invention (Example 3 of Three-Dimensional Structure not according to the claimed invention>

8. Seventh Embodiment not according to the claimed invention (Example of Manufacturing Apparatus for Manufacturing Three-Dimensional

Structure not according to the claimed invention>

<1. Outline of Present Technology>

An outline of the present technology will first be described.

The present technology pays attention to a molecular structure of molecules contained in a three-dimensional structure, and can express anisotropy in physical properties of the three-dimensional structure by aligning the molecules and freely control the physical properties. In addition, the present technology can freely select a free direction of the three-dimensional structure, for example, a direction such as an X direction, a Y direction, or a Z direction, in which the molecules are aligned; thus, the present technology does not impose any restrictions on the physical properties of the three-dimensional structure and can yet ensure quite a high degree of freedom in design of materials for use in manufacturing the three-dimensional structure.

Therefore, according to the present technology, it is possible to express the anisotropy and manufacture a most novel material ever by freely controlling physical property values such as thermophysical, photophysical, or mechanical values of the three-dimensional structure. Moreover, according to the present technology, in a case of molecular orientation control by an electron beam such as light, it is possible to ensure finer molecular orientation control, and combining various AM (Additive Manufacturing) methods with various molecular orientation techniques makes it possible to diversify applicable materials.

The three-dimensional structure according to the present technology is better than at least a two-dimensional film in the following four respects.

- In a case in which an object is a three-dimensional structure, it is often possible to create the three-dimensional structure by building up two-dimensional films. However, in a case in which the object is a three-dimensional structure subjected to fine molecular orientation, alignment accuracy is not ensured by building up films and it is impossible to create an intended anisotropic three-dimensional structure.
- With the three-dimensional structure, it is possible to easily create a hollow structure that is unattainable with the two-dimensional film.
- In a case of a lens or the like, it is conceivable that a Fresnel lens created using a two-dimensional film is substituted for the lens; however, the Fresnel lens involves a fault of having a concentric line and an influence of diffraction makes conspicuous degradation of imaging performance. For this reason, it is more preferable to construct a three-dimensional lens structure. Furthermore, controlling a refractive index of the three-dimensional structure possibly enables the three-dimensional structure to be applied to various types of optical elements.
- It is possible to finely dispose various materials. It is noted that a resolution depends on a performance of a 3D printer or the like.

An applicable range of the three-dimensional structure according to the present technology is not particularly limited to the optical elements, the optical members, the optical materials, or the like described above. The three-dimensional structure according to the present technology is applicable to, for example, construction members, soft robotics members, sport gears and protectors requiring special mechanical properties, biomaterials, intelligent textile, elastomer, heat dissipation/heat storage materials, toys, or the like.

<2. First Embodiment not forming part of the claimed invention (Example 1 of Three-Dimensional Structure Manufacturing Method not forming part of the claimed invention)>

A three-dimensional structure manufacturing method in a first embodiment not according to the claimed invention (example 1 of a three-dimensional structure manufacturing method not according to the claimed invention) is a manufacturing method including: forming a layer containing at least one type of chemical substance (layer for forming a three-dimensional structure); and orienting molecules of at least one type of chemical substance, the forming the layer and the orienting the molecules being repeated a plurality of times.

The three-dimensional structure manufacturing method in the first embodiment not according to the claimed invention may include the forming the layer containing at least one type of chemical substance, and the orienting the molecules of at least one type of chemical substance in this order.

The three-dimensional structure manufacturing method in the first embodiment not according to the claimed invention may orient the molecules of at least one type of chemical substance after the forming the layer is repeated a plurality of times.

The chemical substance used in the three-dimensional structure manufacturing method in the first embodiment not according to the claimed invention may be organic compounds, inorganic compounds, or macromolecular compounds, and contains molecules each having a chiral molecular skeleton.

The three-dimensional structure manufacturing method in the first embodiment not according to the claimed invention may orient the molecules of the chemical substance after forming a plurality of layers by repeatedly forming the layer containing at least one type of chemical substance a plurality of times.

The three-dimensional structure manufacturing method in the first embodiment not according to the claimed invention is a method of piling up thin films in a thickness direction using, for example, a 3D printer. Including a process for forming each layer and a process for orienting the molecules of the chemical substance enables the three-dimensional structure manufacturing method in the first embodiment not according to the claimed invention to align molecules. Aligning the molecules makes it possible to obtain anisotropic physical properties.

For example, combining an FDM (Fused Deposition Modeling) method and a rubbing method of aligning molecules makes it possible to redefine a molecular direction after forming layers. The rubbing method is a technique established in a liquid crystal display manufacturing process. In general, it is possible to give an orientational order to liquid crystal molecules on a polyimide/liquid crystal interface by inducing molecular orientation of a polyimide surface. With this method, it is possible to further orient molecules on the built-up layers.

Furthermore, as another example, combining an STL (Stereo lithography) method and a photo-orientation method of aligning molecules makes it possible to deal with molecular orientation on each layer to be formed simultaneously with UV irradiation at a time of forming the layer. Specifically, applying linearly polarized light, obliquely emitted parallel light, or both the linearly polarized light and the obliquely emitted parallel light as the UV light to be radiated enables control over molecular orientation. As a method of further establishing the order, obliquely radiating the UV light makes it possible to three-dimensionally determine the molecular direction.

Two examples of the three-dimensional structure manufacturing method in the first embodiment not according to the claimed invention will be described hereinafter with reference to FIGS. 1 and 2.

FIG. 1 depicts explanatory diagrams of the three-dimensional structure manufacturing method not according to the claimed invention of alternately forming a layer and orienting molecules of a chemical substance. According to the three-dimensional structure manufacturing method depicted in FIG. 1, it is possible to obtain a structure having anisotropy in physical properties in three dimensions.

According to the three-dimensional structure manufacturing method not according to the claimed invention depicted in FIG. 1, layers are formed (process for forming layers) in FIGS. 1(A), 1(C), and 1(E), and molecules contained in the layers are oriented (process for orienting molecules) in FIGS. 1(B), 1(D), and 1(F).

A first layer 21(2) is formed on a base material 1 in an arrow P11 direction in FIG. 1(A), and a photo-orientation process is performed on the first layer 21(2) in an arrow P12 direction in FIG. 1(B) to produce a layer 22(2) in a controlled molecular orientation state. Next, a second layer 21(2) is formed on the first layer 22(2) in an arrow P13 direction in FIG. 1(C), and a photo-orientation process is performed on the second layer 21(2) in an arrow P14 direction in FIG. 1(D) to produce two layers 22(2) in the controlled molecular orientation state. Furthermore, a third layer 21(2) is formed on the second layer 22(2) in an arrow P15 direction in FIG. 1(E), and a photo-orientation process is performed on the third layer 21(2) in an arrow P16 direction in FIG. 1(F) to produce three layers 22(2) in the controlled molecular orientation state.

A desired three-dimensional structure is manufactured by repeating FIGS. 1(A) to 1(F) a predetermined number of times.

FIG. 2 depicts explanatory diagrams of the three-dimensional structure manufacturing method not according to the claimed invention of alternately forming a plurality of layers by repeatedly forming a layer a plurality of times, and orienting molecules. According to the three-dimensional structure manufacturing method not according to the claimed invention depicted in FIG. 2, it is possible to obtain a structure having anisotropy in physical properties in three dimensions, and it is also possible to shorten manufacturing takt time by performing a process for forming each layer a plurality of times and performing a molecular orientation process after forming (building up) a plurality of layers.

According to the three-dimensional structure manufacturing method not according to the claimed invention depicted in FIG. 2, layers are formed (process for forming layers) in FIGS. 2(A) and 2(C), and molecules contained in the layers are oriented (process for orienting molecules) in FIGS. 2(B) and 2(D).

The first layer 21(2) is formed on the base material 1 in an arrow P21 direction in FIG. 2(A). Although not depicted, before forming the second layer 21(2), the first layer 21(2) may be processed by the UV light, the heat, or the like so that the second layer 21(2) is built up on the first layer 21(2) as needed. The second layer 21(2) is formed on the first layer 21(2), and the photo-orientation process is performed on the first layer 21(2) and the second layer 21(2) in an arrow P22 direction to produce two layers 22(2) in the controlled molecular orientation state in FIG. 2(B). Although not depicted, before forming the third layer 21(2), the second layer 21(2) may be processed by the UV light, the heat, or the like so that the third layer 21(2) is built up on the second layer 21(2) as needed. In FIG. 2(C), the third layer 21(2) is formed on the second layer 22(2) in an arrow P23 direction. Although not depicted, before forming a fourth layer 21(2), the second layer 21(2) may be processed by the UV light, the heat, or the like so that the third layer 21(2) is built up on the third layer 21(2) as needed. The fourth layer 21(2) is formed on the third layer 21(2), and the photo-orientation process is performed on the third layer 21(2) and the fourth layer 21(2) in an arrow P24 direction to produce four layers 22(2) in the controlled molecular orientation state in FIG. 2(D).

A desired three-dimensional structure is manufactured by repeating FIGS. 2(A) to 2(D) a predetermined number of times.

[Forming layer containing at least one type of chemical substance]

Forming a layer containing at least one type of chemical substance (also referred to as "forming a layer" or "process for forming a layer") included in the three-dimensional structure manufacturing method in the first embodiment not according to the claimed invention will be described in detail. It is noted that forming a layer may include, for example, applying a material (mixture composition or the like) containing at least one type of chemical substance onto the base material or the like, and processing the layer so that a next layer or an orientation film is built up on the layer. In addition, processing the layer so that a next layer and/or the orientation film are/is built up on the layer may include polymerizing (solidifying) at least one type of chemical substance by the UV light, the heat, or the like.

Forming a layer (process for forming a layer) is performed using one of the FDM (Fused Deposition Modeling) method, the STL (Stereo lithography) method, an ink jet scheme, an SLS (Selective Laser Sintering) method, a projection scheme, a powder bed and ink jet scheme, a sheet lamination scheme, a binder jetting method, a powder bed fusion method, and a directed energy deposition method.

The schemes or methods mentioned above as examples will be specifically described hereinafter.

(FDM (Fused Deposition Modeling) method)

The FDM method is one of build schemes in rapid prototyping/3D printers developed by Scott Crump of Stratasys, Ltd., American manufacturer of 3D printers, in the late 1980s. With the FDM method, a stereoscopic shape is created by melting thermoplastic filaments at high temperature and building up the filaments layer by layer. The filaments are built up layer by layer by extruding a resin spool by a pulley within a build head and pressing the extruded resin against a build table while melting the resin with a heater placed ahead of the head.

While the FDM method is only to build up the melted resin layer by layer and a principle thereof is quite simple, various conditions such as a degree of shrinkage, a linear expansion coefficient, and a dissolution temperature vary depending on a thermoplastic resin and the conditions also vary depending on a shape to be created because of a scheme that does not use a mold. Thus, a great deal of know-how and condition data are actually necessary to create a stereoscopic object using this scheme.

(STL (Stereo lithography) method)

The STL method is the oldest scheme among the 3D printing technologies. The STL is the technology invented in Japan and put into practical use by 3D Systems, Inc. in 1987. The STL is a build scheme using a liquid resin (photo-curable resin) solidified when being irradiated with ultraviolet light.

In principle, a tank filled with the photo-curable resin is irradiated with ultraviolet laser light to create each layer. When one layer is created, a build platform is lowered by as much as one layer and the resin is built up layer by layer, thereby building up the layers.

(Ink Jet scheme)

The ink jet scheme is a scheme of jetting a liquid ultraviolet curable resin and irradiating the resin with ultraviolet light, thereby solidifying and building up the resin layer by layer. The ink jet scheme is a build method to which a principle of an ink jet printer that prints paper is applied.

In principle, a liquefied resin is sprayed as in the ink jet printer and irradiated with ultraviolet light, thereby solidifying the resin. A three-dimensional object is fabricated by building up the resin layer by layer.

(SLS (Selective Laser Sintering) method)

The selective laser sintering additive manufacturing is a build scheme of irradiating a powder material with a high-power laser beam and sintering the material. As a main material, a resin material such as nylon or a metallic material such as copper, bronze, titanium, or nickel can be used. Since a three-dimensional object fabricated by the SLS method is high in durability, the object is handled as not only a design prototype but also an available prototype model (functional model) and used at a time of a test before mass production.

In principle, the selective laser sintering scheme is similar to the stereo lithography method, and irradiates powder on a platform with a laser beam to sinter the powder. When the powder is solidified, the platform is lowered. This operation is repeatedly conducted by times corresponding to slices and the object is fabricated.

(Projection scheme)

The projection scheme is a kind of the stereo lithography scheme. The projection scheme solidifies a resin using light from a projector and builds up the resin layer by layer. Since the resin is irradiated with the light from below, a model is fabricated upside down.

In principle, the projection scheme lifts a platform and fabricates a model so that the model is suspended upside down while the stereo lithography scheme lowers the platform during fabrication. The stereo lithography scheme uses the laser beam for irradiation, while the projection scheme uses the projector to irradiate the entire build platform with the light. A mask that blocks the light is present between the platform and the resin to prevent parts other than parts to be fabricated from being irradiated during fabrication.

(Powder bed and ink jet scheme)

The powder bed and ink jet scheme is a scheme of adhesively bonding and solidifying powder such as starch powder or plaster powder with a resin. For that reason, the powder bed and ink jet scheme is also referred to as "binder jet 3D printing method." A typical 3D printer based on the powder bed and ink jet scheme is a Z printer manufactured by Z-Corporation (currently merged with 3D Systems, Inc.). The powder bed and ink jet scheme has a noticeable feature of capable of fabricating a three-dimensional object in full color.

In principle, powder is first spread over a build platform by a thickness of one layer. Next, an adhesive is jetted from an ink jet onto the powder, the ink (adhesive) is sprayed onto the powder in accordance with 3D data to solidify the powder. When one layer can be printed, the build platform is lowered by one layer. Furthermore, a next layer is printed on the first layer in accordance with the 3D data. By repeating these processes and building up a plurality of layers, the three-dimensional object is fabricated.

(Sheet lamination scheme)

A sheet lamination scheme is an additive manufacturing method of fabricating a shape by building up sheets. There are several types of sheet lamination scheme, which include a scheme of building paper incised by a cutting plotter using an adhesive layer by layer, a scheme of jetting a photo-curable resin onto a sheet and then transferring the resin thereonto, and a method of impregnating water-soluble paper with a thermosetting resin monomer or photo-curable resin monomer, heating the paper or irradiating the paper with ultraviolet light, pressurizing, and solidifying the paper one layer at a time. The sheet is used in the sheet lamination scheme as an alternative to the base material used in the powder bed and ink jet scheme. The sheet lamination scheme is also referred to as "Laminated Object Manufacturing." Despite a large material loss, the sheet lamination scheme has relatively high accuracy and enables fabrication of a large three-dimensional object. It takes time and labor to conduct operation for removing unnecessary parts.

(Binder jetting method)

The binder jetting method selectively delivers a binder (adhesive) from an ink jet nozzle onto powder such as plaster, a resin, a sand, or ceramics and solidifies the powder. Using a colored binder enables a colored object. It is often necessary to perform a process for impregnating gaps between the powders with a material after fabrication.

(Powder bed fusion method)

The powder bed fusion method irradiates powder flatwise spread all over with a laser beam or an electron beam, thereby melting and fusing a cross-sectional shape. An apparatus based on the powder bed fusion method often uses metals or resins. Some apparatuses based on the powder bed fusion method melt resin-coated powder or an added resin without melting a build material itself. While the powder bed fusion method basically fabricates an object using a single material, it is also possible to change materials in a buildup direction in principle.

(Directed energy deposition method)

The directed energy deposition method is based on a buildup welding technique (laser cladding) by spraying a powder material onto positions irradiated with a laser beam. Additive manufacturing is performed by controlling a position of a machining head performing laser beam irradiation and delivery of the powder material. In principle, it is possible to integrally fabricate a stereoscopic model using a mixture of a plurality of materials.

[Orienting molecules of at least one type of chemical substance]

Orienting molecules of at least one type of chemical substance (also referred to as "orienting molecules" or "process for orienting molecules") included in the three-dimensional structure manufacturing method in the first embodiment not according to the claimed invention will be described in detail.

Orienting molecules (process for orienting molecules) is performed using one of a rubbing method, an ion-beam method, a photo-orientation method, a groove orientation method, a magnetic field orientation method, a free interface method, a temperature gradient method, a shear orientation method, an orientation transfer method, a Langmuir-Blodgett method, a photoisomerization reaction method, a photo-rubbing method, an electric field, an electrospinning method, and an electrospray method.

Out of the methods mentioned as examples, the rubbing method, the ion-beam method, the photo-orientation method, the groove orientation method, the magnetic field orientation method, and the free interface method will be specifically described hereinafter.

(Rubbing method)

Forming an orientation film (also referred to as "oriented layer" or "layer containing oriented molecules," the same applies hereinafter) is also referred to as "rubbing process," which is a process for forming fine grooves on a surface of a polymer film to align liquid crystal molecules in order. After a liquid such as a polyimide resin is applied onto a glass substrate, the polyimide resin is burned at approximately 180°C and the surface of the film is rubbed with a rubbing cloth roller in a desired direction. Rubbing the surface gently by fine fibers of the cloth in one direction allows molecules of the resin to be aligned in a fixed direction and also fine grooves to be formed.

(Ion-beam method)

The ion beam orientation technology is a technology for imparting anisotropy to properties of the surface of the orientation film by irradiating the surface thereof with a beam of ionic particles (for example, Ar ions) accelerated in an electric field from an oblique direction as an alternative to rubbing the orientation film with the roller (rubbing method), and thereby orienting liquid crystals. While a diameter of the fibers used in a buffing cloth of an ordinary rubbing roller is approximately several tens of um, a diameter of the Ar ions is equal to or smaller than a hundredthousandth of the diameter of the fibers; thus, it is possible to perform a high-density surface treatment at quite a fine level with the ion beam orientation technology. Therefore, it is possible to realize a smooth black screen having a high contrast and free from roughness and unevenness without scratching the surface of the orientation film.

(Photo-orientation method)

A photo-orientation film is normally obtained by applying a composition (hereinafter, often referred to as "photo-orientation film formation composition") containing a polymer or a monomer having a photoreactive group and a solvent onto a base material and irradiating the composition with polarized light (preferably, polarized UV light). The photo-orientation film is more preferable in that a direction of an orientation restraining force is arbitrarily controlled by selecting a polarization direction of the polarized light with which the composition is irradiated.

The photoreactive group means a group having a liquid crystal orientation capability by light irradiation. Specifically, the photoreactive group is a group that produces a photoreaction that gives origin to the liquid crystal orientation capability, such as induction of orientation of molecules, an isomerization reaction, a dimerization reaction, a photocrosslinking reaction, or a photolytic reaction produced by light irradiation. Among the photoreactive groups, the photoreactive group producing either the dimerization reaction or the photocrosslinking reaction is preferable in excellent orientation. The photoreactive group that possibly produces the reaction is preferably a photoreactive group having an unsaturated bond, particularly a double bond, and more preferably a photoreactive group having at least one bond selected from among a group consisting of a carbon-carbon double bond (C = C bond), a carbon-nitrogen double bond (C = N bond), a nitrogen-nitrogen double bond (N = N bond), and a carbon-oxygen double bond (C = O bond).

Examples of the photoreactive group having the C = C bond include a vinyl group, a polyene group, a stilbene group, a stilbazole group, a stilbazolium group, a chalcone group, a cinnamoyl group, and the like. Examples of the photoreactive group having the C = N bond include bases having such structures as an aromatic Schiff base, an aromatic hydrazine, and the like. Examples of the photoreactive group having the N = N bond include an azobenzene group, an azonaphthalene group, an aromatic heterocyclic azo group, a bisazo group, a formazan group, a group having azoxybenzene as a basic structure, and the like. Examples of the photoreactive group having the C = O bond include a benzophenone group, a coumarin group, an anthraquinone group, a maleimide group, and the like. These groups may have substituents such as an alkyl group, an alkoxy group, an aryl group, an allyloxy group, a cyano group, an alkoxycarbonyl group, a hydroxyl group, a sulfonic acid group, an alkyl halide group, and the like.

Among these photoreactive groups, the photoreactive group engaged with a photodimerization reaction is preferable and the cinnamoyl group and the chalcone group are preferable in that a polarized light irradiation amount necessary for photo-orientation is relatively small and a photo-orientation film excellent in thermal stability and temporal stability tends to be obtained. As the polymer having the photoreactive group, a polymer having the cinnamoyl group so that a terminal portion of a polymer-side chain has a cinnamic acid structure is particularly preferable.

As the solvent of the photo-orientation film formation composition, a solvent that dissolves the polymer and the monomer having the photoreactive group is preferable, and examples of the solvent include the solvent mentioned as a solvent of the oriented polymer composition and the like.

A content of the polymer or the monomer having the photoreactive group in the photo-orientation film formation composition is preferably equal to or higher than 0.2 mass% and more preferably in a range of 0.3 to 10 mass%. The photo-orientation film formation composition may contain a macromolecular material such as polyvinyl alcohol or polyimide and a photosensitizer to an extent that properties of the photo-orientation film are not seriously impaired.

Examples of a method of applying the photo-orientation film formation composition onto a base material include a method similar to a method of applying an oriented polymer composition onto the base material. Examples of a method of removing the solvent from the applied photo-orientation film formation composition include a method similar to a method of removing the solvent from the oriented polymer composition.

A way in which the photo-orientation film formation composition is irradiated with polarized light may be either a way in which the photo-orientation film formation composition which is applied onto the substrate and from which the solvent is removed is directly irradiated with the polarized light or a way in which the polarized light is radiated from a base material-side and permitted to irradiate the photo-orientation film formation composition with the polarized light. It is more preferable that the polarized light is substantially parallel light. A wavelength of the polarized light with which the photo-orientation film formation composition is irradiated is preferably in a wavelength range in which the photoreactive group in the polymer or the monomer having the photoreactive group can absorb light energy. Specifically, the polarized light is more preferably the UV (ultraviolet) light having a wavelength in a range of 250 to 400 nm. Examples of a light source used for polarized light irradiation include a xenon lamp, a high-pressure mercury lamp, an ultra-high-pressure mercury lamp, a metal halide lamp, an ultraviolet light laser such as a KrF excimer laser and an ArF excimer laser, and the like, and the high-pressure mercury lamp, the ultra-high-pressure mercury lamp, and the metal halide lamp are more preferable. This is because these lamps are high in emission intensity of ultraviolet radiation at a wavelength of 313 nm. Radiating the light from the light source through an appropriate polarizer makes it possible to irradiate the photo-orientation film formation composition with the polarized light. As such a polarizer, a polarized light filter, a polarizing prism such as a Glan-Thompson prism and a Glan-Taylor prism, or a wire grid polarizer can be used. It is noted that performing masking at the time of rubbing or polarized light irradiation makes it possible to form a plurality of regions (patterns) differing in liquid crystal orientation directions.

(Groove orientation method)

A groove orientation film is a film having an irregular pattern or a plurality of grooves on a surface of the film. In a case of placing a liquid crystal compound on a film having a plurality of linear grooves aligned equidistantly, liquid crystal molecules are oriented in a direction along the grooves.

Examples of a method of obtaining the groove orientation film include a method of exposing a surface of a photosensitive polyimide film via an exposure mask having patterned slits, performing developing and rinsing processes, and forming an irregular pattern, a method of forming an unsolidified UV curable resin layer on a plate matrix having grooves on a surface thereof, moving the resin layer onto a base material, and then solidifying the resin layer, a method of forming irregularities by pressing a roll matrix having a plurality of grooves onto an unsolidified UV curable resin layer formed on the base material, and then solidifying the resin layer, and the like. Specific examples include methods described in Japanese Patent Laid-Open No. Hei 6-34976 and Japanese Patent Laid-Open No. 2011-242743, and the like.

(Magnetic field orientation method)

Since organic macromolecules contain covalent bonds and are diamagnetic in general, the organic macromolecules are said to be a substance scarce in magnetic properties. Nevertheless, the macromolecular substance in a liquid crystal state is uniform in a direction of anisotropic magnetic susceptibility and is susceptible to high energy depending on a magnetic field, so that macroscopic molecular orientation occurs to the macromolecular substance. A magnitude of this energy is proportional to the anisotropic magnetic susceptibility of liquid crystal and proportional to a square of a magnetic field intensity. A magnitude of a domain having a uniform direction is also important. Denn et al. studied a critical magnetic field and a magnitude of a domain (R.C. Moore, M.M. Denn, and G. Marruci, Polym. Mater, Sci. Eng., 52, 84(1985).), and Stupp et al. studies growth of a domain by aging and a magnetic field orientation speed (J.S. Moore and S.I. Stupp, Macromolecules, 20, 282(1987). Magnetic Orientation of Liquid Crystalline Polymers).

(Free interface method)

There is proposed a method of freely controlling molecular orientation of a liquid crystal film by light from an air side using a very thin surface skin provided on an air-side surface, having a thickness of approximately 20 nm, and reacting to the light. A technique for providing a photoreactive macromolecular thin film on the air side is simple. The thin film is formed by adding several % of a block copolymer containing photoreactive azobenzene prone to be segregated to the air side to liquid crystal macromolecules, and is subjected to annealing for several minutes at approximately 120°C. A heat treatment causes only this block copolymer to be segregated to an air surface. The air-side surface skin of this block copolymer serves as the photo-orientation film. Rod-like molecules called mesogens are oriented perpendicularly to the film surface only with the liquid crystal macromolecules. However, when the block copolymer is segregated to the surface, the rod-like molecules are oriented horizontally (K. Fukuhara et al. Nature Communication 5,3320(2014)).

It is noted that a manner of orienting molecules of at least one type of chemical substance is not limited to those of orienting molecules described above. It is also conceivable according to the invention, as set forth above that molecules are oriented by using one of an electric field other than the magnetic field, and by applying an electrospinning method, an electrospray method, and the photo-rubbing method. An option for a photo-orientation method is a photo-orientation method using a slit.

<3. Second Embodiment (Example 2 of Three-Dimensional Structure Manufacturing Method)>

A three-dimensional structure manufacturing method in a second embodiment according to the present technology (example 2 of the three-dimensional structure manufacturing method) is a manufacturing method including: forming an orientation film; forming a layer containing at least one type of chemical substance (layer for forming a three-dimensional structure); and orienting molecules of at least one type of chemical substance.

The three-dimensional structure manufacturing method in the second embodiment according to the present technology may include the forming the orientation film, the forming the layer containing at least one type of chemical substance, and the orienting the molecules of at least one type of chemical substance in this order.

In the three-dimensional structure manufacturing method in the second embodiment according to the present technology, an orientation process may be performed on the formed orientation film.

The three-dimensional structure manufacturing method in the second embodiment according to the present technology may orient the molecules after forming the layer is repeated a plurality of times, and, in this case, may further perform an orientation process on the formed orientation film.

The three-dimensional structure manufacturing method in the second embodiment according to the present technology repeats the forming the orientation film, the forming the layer, and the orienting the molecules a plurality of times, and, in this case, may further perform an orientation process on the formed orientation film.

The three-dimensional structure manufacturing method in the second embodiment according to the present technology may orient the molecules after the forming the layer is repeated a plurality of times in a case where the forming the orientation film, the forming the layer, and the orienting the molecules are repeated a plurality of times, and, in this case, may further perform an orientation process on the formed orientation film.

The three-dimensional structure manufacturing method in the second embodiment according to the present technology may repeat the forming the layer and the orienting the molecules a plurality of times, and, in this case, may further perform an orientation process on the formed orientation film.

The three-dimensional structure manufacturing method in the second embodiment according to the present technology may orient the molecules after the forming the layer is repeated a plurality of times in a case where the forming the layer and the orienting the molecules are repeated a plurality of times, and, in this case, may further perform an orientation process on the formed orientation film.

The three-dimensional structure manufacturing method in the second embodiment according to the present technology may form the orientation film after the forming the layer and the orienting the molecules are repeated a plurality of times, and, in this case, may further perform an orientation process on the formed orientation film.

The three-dimensional structure manufacturing method in the second embodiment according to the present technology may orient the molecules after the forming the layer is repeated a plurality of times in a case of the forming the orientation film after the forming the layer and the orienting the molecules are repeated a plurality of times, and, in this case, may further perform an orientation process on the formed orientation film.

The chemical substance used in the three-dimensional structure manufacturing method in the second embodiment according to the present technology may be organic compounds, inorganic compounds, or macromolecular compounds, and contains molecules each having a chiral molecular skeleton.

As described later, there is a method of inserting a layer (also referred to as "orientational order layer" or "orientation film," the same applies hereinafter) for giving an orientational order to a layer to be formed into a ground of the layer to be formed in advance and further adding a step (process) of performing an orientation process on the orientational order layer (orientation film), thereby aligning molecules of the layer to be formed on the orientational order layer. With this method, however, orientation of molecules on an interface (normally, air interface) of the layer for forming the structure opposite to the orientational order layer often differs from orientation determined by the orientational order layer. In this case, after forming the layer for forming the structure, a process for orienting molecules is further additionally performed on this layer, thereby making it possible to align the orientation of the molecules on an upper interface of the layer for forming the structure to that on a lower interface thereof. However, in a case in which the layer for forming the structure is considered as a repetition unit and in which a hybrid structure (that is, a periodic structure different in orientational order between the upper and lower interfaces) is to be formed within the layer, then it is unnecessary to perform this process for orienting molecules or it is possible to give a orientational order that is different from a orientational order determined by the orientational order layer by an orientation process method to be further added.

One example of the three-dimensional structure manufacturing method in the second embodiment according to the present technology will be described hereinafter with reference to FIG. 3.

FIG. 3 depicts explanatory diagrams of the three-dimensional structure manufacturing method of forming an orientation film (including performing an orientation process on the formed orientation film); forming a layer; and orienting molecules in this order. Since forming an orientation film is per se performing the orientation process, the three-dimensional structure manufacturing method depicted in FIG. 3 may not always need to perform the orientation process on the formed orientation film. According to the three-dimensional structure manufacturing method depicted in FIG. 3, it is possible to obtain a stereoscopic structure (three-dimensional structure) having anisotropy in physical properties in three dimensions.

According to the three-dimensional structure manufacturing method depicted in FIG. 3, an orientation film is formed (orientation film forming process) in FIGS. 3(A) to 3(C) and 3(J), a layer is formed (process for forming a layer) in FIGS. 3(D) to 3(F), and molecules contained in the layer are oriented (process for orienting molecules) in FIGS. 3(G) to 3(I).

An orientation film 31(3) is applied onto the base material 1 in an arrow P31 direction in FIG. 3(A), and the orientation film 31(3) is subjected to prebaking and burning (imidized in a case of, for example, a polyimide material) to produce an orientation film 32(3) in FIG. 3(B).

In FIG. 3(C), a photo-orientation process is performed on the orientation film 32(3) in an arrow P32 direction to form an orientation film 33(3) having been subjected to a molecular orientation process.

In FIGS. 3(D) and 3(E), the layer 21(2) is formed on the orientation film 33(3) in an arrow P33 direction. In FIG. 3(F), molecules contained in the layer are reoriented (layer 23(2)) by heating or the like as needed.

Next, in FIGS. 3(G) and 3(H), a photo-orientation process is performed on the layer 21(2) (or layer 23(2)) in an arrow P34 direction to produce a layer 24(2) in a controlled molecular orientation state. Furthermore, in FIG. 3(I), the molecules contained in the layer are reoriented (layer 25(2)) by heating or the like as needed.

In FIG. 3(J) (same as FIG. 3(A)), an orientation film 31(3) is applied again onto the layer 24(2) (layer 25(2)) in an arrow P35 direction, and a desired three-dimensional structure is manufactured by repeating FIGS.3(J) (3(A)) and 3(B) to 3(I) a predetermined number of times.

Although not depicted, repeating forming a layer a plurality of times to form (build up) a plurality of layers after forming the orientation film makes it possible to shorten manufacturing takt time while obtaining a structure having anisotropy in physical properties in three dimensions.

[Performing orientation process on orientation film]

Performing an orientation process on the orientation film (also referred to as "process for performing an orientation process on the orientation film," the same applies hereinafter) that may be included in the three-dimensional structure manufacturing method in the second embodiment according to the present technology will be described.

Performing an orientation process on the orientation film (process for performing an orientation process on the orientation film) can be performed using, for example, the rubbing method, the ion-beam method, the photo-orientation method, the groove orientation method, the magnetic field orientation method, the free interface method, the temperature gradient method, the shear orientation method, the orientation transfer method, the Langmuir-Blodgett method, the photoisomerization reaction method, the photo-rubbing method, or the like.

Out of the methods mentioned as examples, the rubbing method, the ion-beam method, the photo-orientation method, the groove orientation method, the magnetic field orientation method, and the free interface method are already described in Section "Orienting molecules (process for orienting molecules)" in the three-dimensional structure manufacturing method in the first embodiment according to the present technology; thus, specific description thereof is omitted herein.

Furthermore, forming a layer containing at least one type of chemical substance (layer for forming a three-dimensional structure) and orienting molecules of at least one type of chemical substance included in the three-dimensional structure manufacturing method in the second embodiment according to the present technology are already described in Sections "Forming layer (process for forming layer)" and "Orienting molecules (process for orienting molecules)" in the three-dimensional structure manufacturing method in the first embodiment according to the present technology; thus, description thereof is omitted herein.

<4. Third Embodiment not according to the claimed invention (Example 3 of Three-Dimensional Structure Manufacturing Method not according to the claimed invention)>

A three-dimensional structure manufacturing method in a third embodiment not according to the claimed invention (example 3 of the three-dimensional structure manufacturing method not according to the claimed invention) is a manufacturing method including: forming an orientation film; and forming a layer containing at least one type of chemical substance (layer for forming a three-dimensional structure) in this order.

The three-dimensional structure manufacturing method in the third embodiment not according to the claimed invention may include the forming the orientation film and the forming the layer containing at least one type of chemical substance in this order.

In the three-dimensional structure manufacturing method in the third embodiment not according to the claimed invention, an orientation process may be performed on the formed orientation film.

The three-dimensional structure manufacturing method in the third embodiment not according to the claimed invention may repeat the forming the layer a plurality of times after forming the orientation film, and, in this case, may further perform an orientation process on the formed orientation film.

The three-dimensional structure manufacturing method in the third embodiment not according to the claimed invention may repeat the forming the orientation film and the forming the layer a plurality of times, and, in this case, may further perform an orientation process on the formed orientation film.

The three-dimensional structure manufacturing method in the third embodiment not according to the claimed invention may repeat the forming the layer a plurality of times after the forming the orientation film in a case where the forming the orientation film and the forming the layer are repeated a plurality of times, and, in this case, may further perform an orientation process on the formed orientation film.

The three-dimensional structure manufacturing method in the third embodiment not according to the claimed invention may form the orientation film after the forming the layer is repeated a plurality of times, and, in this case, may further perform an orientation process on the formed orientation film.

The three-dimensional structure manufacturing method in the third embodiment not according to the claimed invention may repeat the forming the layer a plurality of times after the forming the orientation film in a case of the forming the orientation film after the forming the layer is repeated a plurality of times, and, in this case, may further perform an orientation process on the formed orientation film.

The chemical substance used in the three-dimensional structure manufacturing method in the third embodiment not according to the claimed invention may be organic compounds, inorganic compounds, or macromolecular compounds, and contains molecules each having a chiral molecular skeleton.

There is the method, to align molecules of a layer to be formed by the 3D printer, of inserting a layer ("orientational order layer" or "orientation film") for giving an orientational order to the layer to be formed into a ground of the layer to be formed in advance and further adding a step of performing an orientation process on the orientational order layer, thereby aligning molecules of the layer to be formed on the orientational order layer. While a polyimide film is normally used as the orientational order layer in a liquid crystal display or the like, the film used as the orientational order layer is not limited to the polyimide film. For example, polysiloxane, polyvinyl alcohol, or the like is applicable as the film used as the orientational order layer. As the orientation process performed on the orientational order layer, any of various techniques such as the rubbing method and the photo-orientation method is applicable. It is sufficient to apply an orientation process method suited for a material selected as the orientational order layer.

Two examples of the three-dimensional structure manufacturing method in the third embodiment not according to the claimed invention will be described hereinafter with reference to FIGS. 4 and 5.

FIG. 4 depicts explanatory diagrams of the three-dimensional structure manufacturing method not according to the claimed invention of alternately forming an orientation film (including performing an orientation process on the formed orientation film), and forming a layer. Since forming an orientation film is per se performing the orientation process, the three-dimensional structure manufacturing method depicted in FIG. 4 may not always need to perform the orientation process on the formed orientation film. According to the three-dimensional structure manufacturing method not according to the claimed invention depicted in FIG. 4, it is possible to obtain a structure having anisotropy in physical properties in three dimensions.

According to the three-dimensional structure manufacturing method not according to the claimed invention depicted in FIG. 4, an orientation film is formed to perform an orientation process on the orientation film (molecular orientation process) (orientation film forming process) in FIGS. 4(A) to 4(C) and 4(G), and a layer is formed (process for forming a layer) in FIGS. 4(D) to 4(F).

The orientation film 31(3) is applied onto the base material 1 in an arrow P41 direction in FIG. 4(A), and the orientation film 31(3) is subjected to prebaking and burning (imidized in the case of, for example, the polyimide material) to produce the orientation film 32(3) in FIG. 4(B).

In FIG. 4(C), a photo-orientation process is performed on the orientation film 32(3) in an arrow P42 direction to form the orientation film 33(3) having been subjected to the molecular orientation process.

In FIG. 4(D), the layer 21(2) is formed on the orientation film 33(3) in an arrow P43 direction. In FIGS. 4(D) and 4(E), in a case in which the layer contains a monomer (polymerizable compound), a polymer (polymerized compound) may be formed by solidifying the monomer (polymerizable compound) by the UV light, the heat, or the like. In FIG. 4(F), molecules contained in the layer are reoriented (layer 23(2)) by heating or the like as needed.

In FIG. 4(G) (same as FIG. 4(A)), the orientation film 31(3) is applied again onto the layer 21(2) (23(2)) in an arrow P44 direction, and a desired three-dimensional structure is manufactured by repeating FIGS.4(G) (4(A)) and 4(B) to 4(F) a predetermined number of times.

FIG. 5 depicts explanatory diagrams of the three-dimensional structure manufacturing method not according to the claimed invention of alternately forming an orientation film (including performing an orientation process on the formed orientation film), and forming (building up) a plurality of layers by repeating forming a layer a plurality of times. Since forming an orientation film is per se performing the orientation process, the three-dimensional structure manufacturing method not according to the claimed invention depicted in FIG. 5 may not always need to perform the orientation process on the formed orientation film. According to the three-dimensional structure manufacturing method not according to the claimed invention depicted in FIG. 5, it is possible to obtain a structure having anisotropy in physical properties in three dimensions, and it is also possible to shorten manufacturing takt time by performing a process for forming each layer a plurality of times and forming (building up) a plurality of layers after forming an orientation film. In this case, orientational order determined by the orientation film is kept by transmitting the orientational order from the layer for forming the structure to the layer to be built up next.

According to the three-dimensional structure manufacturing method not according to the claimed invention depicted in FIG. 5, an orientation film is formed to perform an orientation process on the orientation film (molecular orientation process) (orientation film forming process) in FIGS. 5(A) to 5(C) and 5(G), and a layer is formed (process for forming a layer) in FIGS. 5 (D) to 5 (F).

The orientation film 31(3) is applied onto the base material 1 in an arrow P51 direction in FIG. 5(A), and the orientation film 31(3) is subjected to prebaking and burning (imidized in the case of, for example, the polyimide material) to produce the orientation film 32(3) in FIG. 5(B).

In FIG. 5(C), a photo-orientation process is performed on the orientation film 32(3) in an arrow P52 direction to form the orientation film 33(3) having been subjected to the molecular orientation process.

In FIG. 5(D), the first layer 21(2) is formed on the orientation film 33(3) in an arrow P53 direction. In FIG. 5(E), the second layer 21(2) is formed on the first layer 21(2) in an arrow P54 direction. In a case in which the first layer and/or the second layer contain/contains a monomer (polymerizable compound), a polymer (polymerized compound) may be formed by solidifying the monomer (polymerizable compound) by the UV light, the heat, or the like. In FIG. 5(F), molecules contained in the two layers are reoriented (two layers 23(2)) by heating or the like as needed.

In FIG. 5(G) (same as FIG. 5(A)), the orientation film 31(3) is applied again onto the two layers 21(2) (23(2)) in an arrow P55 direction, and a desired three-dimensional structure is manufactured by repeating FIGS.5(G) (5(A)) and 5(B) to 5(F) a predetermined number of times.

Forming a layer containing at least one type of chemical substance (layer for forming a three-dimensional structure) included in the three-dimensional structure manufacturing method in the third embodiment not according to the claimed invention is already described in Section "Forming layer (process for forming layer)" in the three-dimensional structure manufacturing method in the first embodiment not according to the claimed invention; thus, description thereof is omitted herein. Furthermore, performing an orientation process on the orientation film (process for performing an orientation process on the orientation film) that may be included in the three-dimensional structure manufacturing method in the third embodiment not according to the claimed invention is already described in Section "Performing orientation process (process for performing an orientation process on the orientation film)" in the three-dimensional structure manufacturing method in the second embodiment according to the present technology; thus, description thereof is omitted herein.

<5. Fourth Embodiment not according to the claimed invention (Example 1 of Three-Dimensional Structure not according to the claimed invention)>

A three-dimensional structure in a fourth embodiment not according to the claimed invention (example 1 of a three-dimensional structure not according to the claimed invention) is a structure that is obtained by the three-dimensional structure manufacturing method in the first embodiment not according to the claimed invention and that contains a chemical substance having anisotropy. More specifically, the three-dimensional structure in the fourth embodiment not according to the claimed invention is a three-dimensional structure that is obtained by the manufacturing method including forming a layer containing at least one type of chemical substance (layer for forming a three-dimensional structure) and orienting molecules of at least one type of chemical substance in this order, the forming the layer and the orienting the molecules being repeated a plurality of times, and that contains a chemical substance having at least one type of anisotropy. It is noted that the three-dimensional structure in the fourth embodiment not according to the claimed invention may be configured from a chemical substance having anisotropy.

Furthermore, the three-dimensional structure in the fourth embodiment not according to the claimed invention technology (example 1 of the three-dimensional structure) is a structure that is obtained by the three-dimensional structure manufacturing method in the first embodiment not according to the claimed invention and that contains a chemical substance having anisotropy. More specifically, the three-dimensional structure in the fourth embodiment not according to the claimed invention may be a three-dimensional structure that is obtained by the manufacturing method including forming a layer containing at least one type of chemical substance (layer for forming a three-dimensional structure) and orienting molecules of at least one type of chemical substance in this order, the forming the layer and the orienting the molecules being repeated a plurality of times, and that contains a chemical substance having at least one type of anisotropy.

The chemical substance included in the three-dimensional structure in the fourth embodiment not according to the claimed invention and having anisotropy may be organic compounds, inorganic compounds, or macromolecular compounds, and contains molecules each having a chiral molecular skeleton.

The three-dimensional structure in the fourth embodiment not according to the claimed invention may contain macromolecules, and macromolecular main chains may be aligned, macromolecular side chains may be aligned, or both the macromolecular main chains and the macromolecular side chains may be aligned in the three-dimensional structure.

It is sufficient to orient molecules described above to align the macromolecular main chains and/or the macromolecular side chains. To form layers, the FDM (Fused Deposition Modeling) method, for example, is selected as the additive manufacturing, thereby making it possible to realize this structure.

The three-dimensional structure in the fourth embodiment not according to the claimed invention may contain macromolecules and molecules distributed in the macromolecules and each having a mesogen skeleton, and the molecules each having the mesogen skeleton may be aligned in the three-dimensional structure. The molecule having the mesogen skeleton may be a low molecule or a monomer. In a case in which the molecule having the mesogen skeleton is a monomer, a polymer may be formed by polymerizing monomers.

The mesogen is one of elements expressing liquid crystal properties, and is a general name of a functional group (atomic group) having an aromatic ring or the like and exhibiting rigidity and orientation and not a name of a specific functional group. Examples of the mesogen include a structure of biphenyl and the like. At a time of discussing whether molecules are aligned, it is necessary to proceed with a discussion on the basis of a structure in which, for example, molecules have directionality as in the case of the mesogen. In this case, causing molecules, which do not chemically bond to macromolecules but which are distributed in the macromolecules and each of which has the mesogen skeleton, to have directionality enables expression of anisotropy in a macroscopic structure.

The three-dimensional structure in the fourth embodiment not according to the claimed invention may contain macromolecules and inorganic compounds distributed in the macromolecules, and the inorganic compounds may be aligned in the three-dimensional structure.

Even the inorganic compounds as an alternative to mesogenic molecules described above similarly enable expression of anisotropy in the structure. For example, spicules of Stichopodidae includes calcium carbonate crystals and exhibit double refraction by alignment of the crystals. Similarly to the above, aligning the inorganic compounds distributed in the macromolecules along the macromolecule in response to alignment of the macromolecules enables expression of anisotropy in a final structure.

Using natural nanofibers, carbon nanowires, glass fibers, nano oriented crystals, or the like such as carbon fibers, carbon nanotubes, fullerene nanofibers, and collagen as an alternative to the mesogens or the inorganic compounds described above similarly enables expression of anisotropy in the three-dimensional structure. In a case of manufacturing, for example, a carbon fiber composite material, using the present technology makes it possible to realize a highly durable material even with a precise and complicated structure, compared with the conventional technology.

An order parameter for the aligned molecules of at least one type of chemical substance contained in the three-dimensional structure in the fourth embodiment not according to the claimed invention may be an arbitrary value but is preferably equal to or greater than 0.1, more preferably equal to or greater than 0.3.

(Order parameter)

For example, in a nematic liquid crystal that is one type of liquid crystal, changing a temperature triggers a phase transition between a nematic phase and an isotropic phase. An order parameter at this time is referred to as "orientational order parameter" and expressed as follows.

$$S = <P_2 (\cos\theta)> = 1/2 (3 <\cos^2\theta> -1)$$

Here, $P_2$ denotes a quadratic Legendre polynomial, $\theta$ denotes an angle formed with respect to an orientation major axis (average orientation in which a major axis of liquid crystal molecules in a system faces), and < > denotes an average value of an individual molecule. When the system is at a sufficiently low temperature and the orientation is complete orientation in which molecules are completely aligned, $\cos^2\theta$ is expressed as follows.

$$\cos^2\theta = 1$$

In addition, the order parameter is equal to one. On the other hand, in the isotropic phase at a temperature equal to or higher than a transition temperature, the molecular orientation is completely random, and $\cos^2\theta$ is expressed as follows.

$$\cos^2\theta = 1/3$$

Due to $\cos^2\theta$, the order parameter is equal to zero.

The three-dimensional structure in the fourth embodiment not according to the claimed invention may contain macromolecules each having a mesogen (skeleton), and the mesogens may be contained in macromolecular main chains, macromolecular side chains, or both the macromolecular main chains and the macromolecular side chains.

The mesogens may chemically bond to the macromolecules (polymers) for forming the three-dimensional structure by covalent bond. Bond positions of the mesogens within the macromolecules (polymer) may be the macromolecular main chains, the macromolecular side chains, or both the macromolecular main chains and the macromolecular side chains.

The three-dimensional structure in the fourth embodiment not according to the claimed invention may contain macromolecules and photochromic molecules, and the photochromic molecules may be contained in the macromolecular main chains, the macromolecular side chains, or both the macromolecular main chains and the macromolecular side chains. The photochromic molecule may be a low molecule or a monomer. In a case in which the photochromic molecule is a monomer, a polymer may be formed by polymerizing monomers.

A photochromism of the photochromic molecules means a phenomenon that photophysical properties such as light absorption/light emission of a substance reversibly changes by an external stimulus. At a time of expression of the chromism, isomerization of a molecular structure occurs in most cases, so that physical properties such as a refractive index, a dielectric constant, an oxidationreduction potential, and a melting point also change. The phenomenon of occurrence of the chromism by light irradiation is referred to as "photochromism," and a material in which this phenomenon is expressed is referred to as "photochromic molecule" or "photochromic compound." Types of structural isomerization at the time of the photochromism include geometrical photoisomerization (cis-trans isomerization), a ring opening and closing photoreaction, and the like.

In a case in which the photochromic molecules includes such a molecular structure, combining, for example, the STL (Stereo lithography) method with the photo-orientation method of aligning molecules makes it possible to process the molecular orientation of a layer to be formed simultaneously with UV irradiation used at the time of forming the layer. Specifically, applying linearly polarized light as the UV light to be radiated enables control over the molecular orientation. As a method of further establishing the order, obliquely radiating the UV light makes it possible to threedimensionally determine the molecular direction. By using the photochromic molecules for this manufacturing process, the molecules repeatedly go through transformation and a desired molecular orientation state can be obtained.

Examples of the photochromic molecules associated with the molecular orientation include azobenzene. By continuously applying polarized UV light, polarized visible light, or heat to this azobenzene skeleton, azobenzene repeats cis-trans conversion and a desired molecular orientation state can be obtained.

The cis-trans conversion of azobenzene will be described in detail.

FIG. 24 depicts explanatory diagrams of the cis-trans conversion of azobenzene. As depicted in FIG. 24(A), trans-azobenzene (FIG. 24(A-1)) is structurally changed to cis-azobenzene (FIG. 24(A-2) by the UV light. Furthermore, the cis-azobenzene (FIG. 24(A-2) is structurally changed to the trans-azobenzene (FIG. 24(A-1)) by the visible light or the heat.

In FIG. 24(B), a molecular major axis direction T1 of trans-azobenzene is a vertical direction in FIG. 24(B). In this case, as depicted in FIG. 24(C), a traveling direction of the UV light (hv) is a left direction in FIG. 24(C). Since a vibration direction of the UV light (hv) is the vertical direction in FIG. 24(B), azobenzene absorbs the UV light (hv) and structurally changes to cis-azobenzene (FIG. 24(D)).

On the other hand, in FIG. 24(E), a molecular major axis direction T2 of trans-azobenzene is a horizontal direction in FIG. 24(E). In this case, as depicted in FIG. 24(F), the traveling direction of the UV light (hv) is the left direction. Since the vibration direction of the UV light (hv) is the vertical direction in FIG. 24(F), azobenzene does not absorb the UV light (hv) and does not, therefore, structurally change to cis-azobenzene (FIG. 24(G)).

Azobenzene undergoes photoisomerization. The photoisomerization means that a molecule moves by light. In addition, this movement can be expanded to a largerscale movement. For example, when azobenzene is continuously irradiated with polarized light, azobenzene moves while repeating photoisomerization, is settled down into orientation in which azobenzene is incapable of absorbing the polarized light, and stops moving. This behavior will be described with reference to FIGS. 25 and 26.

FIG. 25 depicts explanatory diagrams of directionality of a molecular major axis of azobenzene in a case of vertical incidence of light (random light and linearly polarized light).

FIGS. 25(A) and 25(B) depict a case in which vertically incident light is random light (in the light vibration direction). In FIG. 25(A), when the random light (in the light vibration direction) is vertically incident on azobenzene (traveling direction of the light is a downward direction in FIG. 25(A)), molecules of azobenzene the molecular major axis direction of which is parallel to the light vibration direction absorb the light and move. Furthermore, as depicted in FIG. 25(B), even if the random light (in the light vibration direction) is vertically incident on azobenzene (light traveling direction is the downward direction in FIG. 25(B)), then azobenzene is settled down in the orientation in which the molecules of azobenzene are incapable of absorbing the light, that is, the molecular major axis direction of azobenzene is fixed to the light traveling direction (vertical direction in FIG. 25(B)), and the molecules of azobenzene stop moving.

FIGS. 25(C) and 25(D) depict a case in which the vertically incident light is linearly polarized light (in the light vibration direction). In FIG. 25(C), when the linearly polarized light (in the light vibration direction) is vertically incident on azobenzene (light traveling direction is the downward direction in FIG. 25(C)), the molecules of azobenzene the molecular major axis direction of which is parallel to the light vibration direction absorb the light and move. Furthermore, as depicted in FIG. 25(D), even if the linearly polarized light (in the light vibration direction) is vertically incident on azobenzene (light traveling direction is the downward direction in FIG. 25(D)), then azobenzene is settled down in the orientation in which the molecules of azobenzene are incapable of absorbing light, that is, the molecular major axis direction of azobenzene is fixed in a plane yz (in a plane perpendicular to the light vibration direction), in which the light vibration direction is an x-axis direction, and the molecules of azobenzene stop moving.

FIG. 26 depicts explanatory diagrams of the directionality of the molecular major axis of azobenzene in a case of oblique incidence of light (random light and linearly polarized light).

FIGS. 26(A) and 26(B) depict a case in which obliquely incident light is random light (in the light vibration direction). In FIG. 26(A), when the random light (in the light vibration direction) is obliquely incident on azobenzene (light traveling direction is a lower left direction in FIG. 26(A)), the molecules of azobenzene the molecular major axis direction of which is parallel to the light vibration direction absorb the light and move. Furthermore, as depicted in FIG. 26(B), even if the random light (in the light vibration direction) is obliquely incident on azobenzene (light traveling direction is the lower left direction in FIG. 26(B)), then azobenzene is settled down in the orientation in which the molecules of azobenzene are incapable of absorbing the light, that is, the molecular major axis direction of azobenzene is fixed to the light traveling direction (lower left direction in FIG. 26(B)), and the molecules of azobenzene stop moving.

FIGS. 26(C) and 26(D) depict a case in which the obliquely incident light is linearly polarized light (in the light vibration direction). In FIG. 26(C), when the linearly polarized light (in the light vibration direction) is obliquely incident on azobenzene (light traveling direction is the lower left direction in FIG. 26(C)), the molecules of azobenzene the molecular major axis direction of which is parallel to the light vibration direction absorb the light and move. Furthermore, as depicted in FIG. 26(D), even if the linearly polarized light (in the light vibration direction) is obliquely incident on azobenzene (light traveling direction is the lower left direction in FIG. 26(D)), then azobenzene is settled down in the orientation in which the molecules of azobenzene are incapable of absorbing light, that is, the molecular major axis direction of azobenzene is fixed in a plane x' perpendicular to the light vibration direction and containing an x-axis and the light traveling direction, and the molecules of azobenzene stop moving.

The three-dimensional structure in the fourth embodiment not according to the claimed invention may contain macromolecules and an unsaturated aromatic carboxylic acid. In this case, the unsaturated aromatic carboxylic acid may be contained in the macromolecular main chains, the macromolecular side chains, or both the macromolecular main chains and the macromolecular side chains. The unsaturated aromatic carboxylic acid may be a low molecule or a monomer. In a case in which the unsaturated aromatic carboxylic acid is a monomer, a polymer may be formed by polymerizing monomers.

Among the unsaturated aromatic carboxylic acids, an unsaturated aromatic carboxylic acid of, for example, a cinnamate structure or a chalcone structure absorbs polarized ultraviolet light and forms dimers. Since a direction of the dimers is according to a direction of the radiated polarized light, using the unsaturated aromatic carboxylic acid makes it possible to cause anisotropy in a structure to be manufactured.

The three-dimensional structure in the fourth embodiment not according to the claimed invention may contain at least one type of macromolecules, and the macromolecules are not limited to a specific type and may be homopolymers, or polymers including copolymerization, that is, copolymers, terpolymers, or the like. In a case of the copolymers, the macromolecular main chains and the macromolecular side chains may have different monomer components. Furthermore, an additive such as a polymerization initiator or a photosensitizer, or a monomer corresponding to a cross-linking agent may be contained in the three-dimensional structure in the fourth embodiment according to the present technology, and may be used at a time of manufacturing the three-dimensional structure in the fourth embodiment not according to the claimed invention.

<6. Fifth Embodiment (Example 2 of Three-Dimensional Structure)>

A three-dimensional structure in a fifth embodiment according to the present technology (example 2 of the three-dimensional structure) is a structure that is obtained by the three-dimensional structure manufacturing method in the second embodiment according to the present technology and that contains a chemical substance having anisotropy. More specifically, the three-dimensional structure in the fifth embodiment according to the present technology is a three-dimensional structure that is obtained by the manufacturing method including forming an orientation film (which may or may not include an orientation process on the orientation film), forming a layer containing at least one type of chemical substance (layer for forming a three-dimensional structure), and orienting molecules of at least one type of chemical substance, and that contains a chemical substance having at least one type of anisotropy. It is noted that the three-dimensional structure in the fifth embodiment according to the present technology is configured from a chemical substance having anisotropy.

Furthermore, the three-dimensional structure in the fifth embodiment according to the present technology (example 2 of the three-dimensional structure) is the structure that is obtained by the three-dimensional structure manufacturing method in the second embodiment according to the present technology and that contains a chemical substance having anisotropy. More specifically, the three-dimensional structure in the fifth embodiment according to the present technology is the three-dimensional structure that is obtained by the manufacturing method including forming an orientation film (which may or may not include the orientation process on the orientation film), forming a layer containing at least one type of chemical substance (layer for forming the three-dimensional structure), and orienting molecules of at least one type of chemical substance in this order, and that contains a chemical substance having at least one type of anisotropy.

The chemical substance included in the three-dimensional structure in the fifth embodiment according to the present technology and having anisotropy may be organic compounds, inorganic compounds, or macromolecular compounds, and contains molecules each having a chiral molecular skeleton.

The three-dimensional structure in the fifth embodiment according to the present technology may contain macromolecules, and macromolecular main chains may be aligned, macromolecular side chains may be aligned, or both the macromolecular main chains and the macromolecular side chains may be aligned in the three-dimensional structure.

It is sufficient to form an orientation film (which may or may not include the orientation process on the orientation film) described above and/or orient molecules to align the macromolecular main chains and/or the macromolecular side chains.

To form layers, the FDM (Fused Deposition Modeling) method, for example, is selected as the additive manufacturing, thereby making it possible to realize this structure.

The three-dimensional structure in the fifth embodiment according to the present technology may contain macromolecules and molecules distributed in the macromolecules and each having a mesogen skeleton, and the molecules each having the mesogen skeleton may be aligned in the three-dimensional structure. The molecule having the mesogen skeleton may be a low molecule or a monomer. In a case in which the molecule having the mesogen skeleton is a monomer, a polymer may be formed by polymerizing monomers. Since the molecules contained in the three-dimensional structure in the fifth embodiment according to the present technology and each having the mesogen skeleton are similar to those contained in the three-dimensional structure in the fourth embodiment according to the present technology and each having the mesogen skeleton, description of the molecules each having the mesogen skeleton is omitted herein.

The three-dimensional structure in the fifth embodiment according to the present technology may contain macromolecules and inorganic compounds distributed in the macromolecules, and the inorganic compounds may be aligned in the three-dimensional structure. Since the inorganic compounds contained in the three-dimensional structure in the fifth embodiment according to the present technology are similar to those contained in the three-dimensional structure in the fourth embodiment according to the present technology, description of the inorganic compounds is omitted herein.

Using natural nanofibers, carbon nanowires, glass fibers, nano oriented crystals, or the like such as carbon fibers, carbon nanotubes, fullerene nanofibers, and collagen as an alternative to the mesogens or the inorganic compounds described above similarly enables expression of anisotropy in the three-dimensional structure. In a case of manufacturing, for example, a carbon fiber composite material, using the present technology makes it possible to realize a highly durable material even with a precise and complicated structure, compared with the conventional technology.

An order parameter for the aligned molecules of at least one type of chemical substance included in the three-dimensional structure in the fifth embodiment according to the present technology may be an arbitrary value but is preferably equal to or greater than 0.1, more preferably equal to or greater than 0.3. Since the order parameter for the three-dimensional structure in the fifth embodiment according to the present technology is already described in Section "Order parameter" for the three-dimensional structure in the fourth embodiment according to the present technology, description of the order parameter is omitted herein.

The three-dimensional structure in the fifth embodiment according to the present technology may contain macromolecules each having a mesogen (skeleton), and the mesogens may be contained in macromolecular main chains, macromolecular side chains, or both the macromolecular main chains and the macromolecular side chains. Since the macromolecules contained in the three-dimensional structure in the fifth embodiment according to the present technology and each having the mesogen skeleton are similar to those contained in the three-dimensional structure in the fourth embodiment according to the present technology and each having the mesogen skeleton, description of the macromolecules each having the mesogen skeleton is omitted herein.

The three-dimensional structure in the fifth embodiment according to the present technology may contain macromolecules and photochromic molecules, and the photochromic molecules may be contained in the macromolecular main chains, the macromolecular side chains, or both the macromolecular main chains and the macromolecular side chains. The photochromic molecule may be a low molecule or a monomer. In a case in which the photochromic molecule is a monomer, a polymer may be formed by polymerizing monomers. Since the photochromic molecules contained in the three-dimensional structure in the fifth embodiment according to the present technology are similar to those contained in the three-dimensional structure in the fourth embodiment according to the present technology, description of the photochromic molecules is omitted herein.

The three-dimensional structure in the fifth embodiment according to the present technology may contain macromolecules and an unsaturated aromatic carboxylic acid, and the unsaturated aromatic carboxylic acid may be contained in the macromolecular main chains, the macromolecular side chains, or both the macromolecular main chains and the macromolecular side chains. The unsaturated aromatic carboxylic acid may be a low molecule or a monomer. In a case in which the unsaturated aromatic carboxylic acid is a monomer, a polymer may be formed by polymerizing monomers. Since the unsaturated aromatic carboxylic acid contained in the three-dimensional structure in the fifth embodiment according to the present technology is similar to that contained in the three-dimensional structure in the fourth embodiment according to the present technology, description of the unsaturated aromatic carboxylic acid is omitted herein.

The three-dimensional structure in the fifth embodiment according to the present technology may contain at least one type of macromolecules, and the macromolecules are not limited to a specific type and may be homopolymers, or polymers including copolymerization, that is, copolymers, terpolymers, or the like. In a case of, for example, the copolymers, the macromolecular main chains and the macromolecular side chains may have different monomer components. Furthermore, the additive such as the polymerization initiator or the photosensitizer, or the monomer corresponding to the cross-linking agent may be contained in the three-dimensional structure in the fifth embodiment according to the present technology, and may be used at a time of manufacturing the three-dimensional structure in the fifth embodiment according to the present technology.

<7. Sixth Embodiment not according to the claimed invention (Example 3 of Three-Dimensional Structure not according to the claimed invention)>

A three-dimensional structure in a sixth embodiment not according to the claimed invention (example 3 of the three-dimensional structure not according to the claimed invention) is a structure that is obtained by the three-dimensional structure manufacturing method in the third embodiment not according to the claimed invention to and that contains a chemical substance having anisotropy. More specifically, the three-dimensional structure in the sixth embodiment not according to the claimed invention is a three-dimensional structure that is obtained by the manufacturing method including forming an orientation film (which may or may not include an orientation process on the orientation film), and forming a layer containing at least one type of chemical substance (layer for forming a three-dimensional structure), and that contains a chemical substance having at least one type of anisotropy. It is noted that the three-dimensional structure in the sixth embodiment not according to the claimed invention technology may be configured from a chemical substance having anisotropy.

Furthermore, the three-dimensional structure in the sixth embodiment not according to the claimed invention (example 3 of the three-dimensional structure) is the structure that is obtained by the three-dimensional structure manufacturing method in the third embodiment not according to the claimed invention and that contains a chemical substance having anisotropy. More specifically, the three-dimensional structure in the sixth embodiment not according to the claimed invention may be a three-dimensional structure that is obtained by the manufacturing method including forming an orientation film (which may or may not include an orientation process on the orientation film), and forming a layer containing at least one type of chemical substance (layer for forming a three-dimensional structure) in this order, and that contains a chemical substance having at least one type of anisotropy.

The chemical substance included in the three-dimensional structure in the sixth embodiment not according to the claimed invention and having anisotropy may be organic compounds, inorganic compounds, or macromolecular compounds, and contains molecules each having a chiral molecular skeleton.

The three-dimensional structure in the sixth embodiment not according to the claimed invention may contain macromolecules, and macromolecular main chains may be aligned, macromolecular side chains may be aligned, or both the macromolecular main chains and the macromolecular side chains may be aligned in the three-dimensional structure.

It is sufficient to use the process for forming the orientation film (which may or may not include the orientation process on the orientation film) described above to align the macromolecular main chains and/or the macromolecular side chains. To form layers, the FDM (Fused Deposition Modeling) method, for example, is selected as the additive manufacturing, thereby making it possible to realize this structure.

The three-dimensional structure in the sixth embodiment not according to the claimed invention may contain macromolecules and molecules distributed in the macromolecules and each having a mesogen skeleton, and the molecules each having the mesogen skeleton may be aligned in the three-dimensional structure. The molecule having the mesogen skeleton may be a low molecule or a monomer. In a case in which the molecule having the mesogen skeleton is a monomer, a polymer may be formed by polymerizing monomers. Since the molecules contained in the three-dimensional structure in the sixth embodiment according to the present technology and each having the mesogen skeleton are similar to those contained in the three-dimensional structure in the fourth embodiment not according to the claimed invention and each having the mesogen skeleton, description of the molecules each having the mesogen skeleton is omitted herein.

The three-dimensional structure in the sixth embodiment not according to the claimed invention may contain macromolecules and inorganic compounds distributed in the macromolecules, and the inorganic compounds may be aligned in the three-dimensional structure. Since the inorganic compounds contained in the three-dimensional structure in the sixth embodiment not according to the claimed invention are similar to those contained in the three-dimensional structure in the fourth embodiment not according to the claimed invention, description of the inorganic compounds is omitted herein.

Using natural nanofibers, carbon nanowires, glass fibers, nano oriented crystals, or the like such as carbon fibers, carbon nanotubes, fullerene nanofibers, and collagen as an alternative to the mesogens or the inorganic compounds described above similarly enables expression of anisotropy in the three-dimensional structure. In a case of manufacturing, for example, a carbon fiber composite material, using the present technology makes it possible to realize a highly durable material even with a precise and complicated structure, compared with the conventional technology.

An order parameter for the aligned molecules of at least one type of chemical substance included in the three-dimensional structure in the sixth embodiment not according to the claimed invention may be an arbitrary value but is preferably equal to or greater than 0.1, more preferably equal to or greater than 0.3. Since the order parameter for the three-dimensional structure in the sixth embodiment not according to the claimed invention is already described in Section "Order parameter" for the three-dimensional structure in the fourth embodiment according to the present technology, description of the order parameter is omitted herein.

The three-dimensional structure in the sixth embodiment not according to the claimed invention may contain macromolecules each having a mesogen (skeleton), and the mesogens may be contained in macromolecular main chains, macromolecular side chains, or both the macromolecular main chains and the macromolecular side chains. Since the macromolecules contained in the three-dimensional structure in the sixth embodiment not according to the claimed invention and each having the mesogen skeleton are similar to those contained in the three-dimensional structure in the fourth embodiment not according to the claimed invention and each having the mesogen skeleton, description of the macromolecules each having the mesogen skeleton is omitted herein.

The three-dimensional structure in the sixth embodiment not according to the claimed invention may contain macromolecules and photochromic molecules, and the photochromic molecules may be contained in the macromolecular main chains, the macromolecular side chains, or both the macromolecular main chains and the macromolecular side chains. The photochromic molecule may be a low molecule or a monomer. In a case in which the photochromic molecule is a monomer, a polymer may be formed by polymerizing monomers. Since the photochromic molecules contained in the three-dimensional structure in the sixth embodiment not according to the claimed invention are similar to those contained in the three-dimensional structure in the fourth embodiment not according to the claimed invention, description of the photochromic molecules is omitted herein.

The three-dimensional structure in the sixth embodiment not according to the claimed invention may contain macromolecules and an unsaturated aromatic carboxylic acid, and the unsaturated aromatic carboxylic acid may be contained in the macromolecular main chains, the macromolecular side chains, or both the macromolecular main chains and the macromolecular side chains. The unsaturated aromatic carboxylic acid may be a low molecule or a monomer. In a case in which the unsaturated aromatic carboxylic acid is a monomer, a polymer may be formed by polymerizing monomers. Since the unsaturated aromatic carboxylic acid contained in the three-dimensional structure in the sixth embodiment not according to the claimed invention is similar to that contained in the three-dimensional structure in the fourth embodiment not according to the claimed invention, description of the unsaturated aromatic carboxylic acid is omitted herein.

The three-dimensional structure in the sixth embodiment not according to the claimed invention may contain at least one type of macromolecules, and the macromolecules are not limited to a specific type and may be homopolymers, or polymers including copolymerization, that is, copolymers, terpolymers, or the like. In a case of, for example, the copolymers, the macromolecular main chains and the macromolecular side chains may have different monomer components. Furthermore, the additive such as the polymerization initiator or the photosensitizer, or the monomer corresponding to the cross-linking agent may be contained in the three-dimensional structure in the sixth embodiment according to the present technology, and may be used at a time of manufacturing the three-dimensional structure in the sixth embodiment not according to the claimed invention.

<8. Seventh Embodiment not according to the claimed invention (Example of Manufacturing Apparatus for Manufacturing Three-Dimensional Structure not according to the claimed invention)>

A manufacturing apparatus for manufacturing a three-dimensional structure in a seventh embodiment not according to the claimed invention (example of a manufacturing apparatus for manufacturing a three-dimensional structure not according to the claimed invention) is a manufacturing apparatus including at least a layer forming section that forms a layer containing at least one type of chemical substance.

The layer forming section that forms the layer containing at least one type of chemical substance may include, for example, an application section that applies a material (mixture composition or the like) containing at least one type of chemical substance onto a base material or the like, and a processing section that processes the layer so that a next layer or an orientation film is built up on the layer. In addition, the processing section that processes the layer so that the next layer and/or the orientation film are/is built up on the layer may include a polymerization processing section that polymerizes (solidifies) at least one type of chemical substance by the UV light, the heat, or the like.

The manufacturing apparatus for manufacturing the three-dimensional structure in the seventh embodiment not according to the claimed invention may further include an orientation film forming section that forms an orientation film. Furthermore, the manufacturing apparatus for manufacturing the three-dimensional structure in the seventh embodiment not according to the claimed invention may further include a molecular orientation section that orients molecules of at least one type of chemical substance.

Moreover, the manufacturing apparatus for manufacturing the three-dimensional structure in the seventh embodiment not according to the claimed invention may further include: an orientation film forming section that forms an orientation film; and a molecular orientation section that orients molecules of at least one type of chemical substance.

The chemical substance used in the layer forming section included in the manufacturing apparatus for manufacturing the three-dimensional structure in the seventh embodiment not according to the claimed invention may be organic compounds, inorganic compounds, or macromolecular compounds, and contains molecules each having a chiral molecular skeleton.

The chemical substance used in the molecular orientation section that may be included in the manufacturing apparatus for manufacturing the three-dimensional structure in the seventh embodiment not according to the claimed invention may be organic compounds, inorganic compounds, or macromolecular compounds, and contains molecules each having a chiral molecular skeleton.

Examples

Advantages of the present technology will be specifically described while referring to examples. It is noted that the scope of the present technology is not limited to the examples.

<First Example>

[Three-dimensional structure manufacturing method including: forming an orientation film; and forming a layer]

A first example not according to the claimed invention will be described with reference to FIGS. 6 and 7. FIGS. 6(A) and 6(B) are diagrams for explaining that molecules can be oriented without performing an orientation process on an orientation film. FIG. 7 depicts explanatory diagrams of a three-dimensional structure manufacturing method including: forming an orientation film; and forming a layer.

There is an orientation film capable of orienting molecules without performing an orientation process on the orientation film. Examples of the orientation film include orientation films of polyimide and polysiloxane for perpendicularly orienting molecules. An orientation method using such an orientation film is as follows. Side chains such as alkyl chains or side chains of a cholesterol skeleton are attached to main chains of polyimide or polysiloxane, the side chains protrude from a surface of the orientation film (in such a manner as a frog for flower arrangement), and materials (molecules) in contact with the side chains are thereby aligned after the manner of the side chains. As another orientation film that can dispense with the orientation process, there is an orientation film used in a method such as $SiO_2$ oblique evaporation.

As depicted in FIG. 6(A), an orientation film 41-1 used in the first example is an orientation film that can orient molecules without performing an orientation process. Macromolecular side chains 511 that are, for example, alkyl chains, side chains of the cholesterol skeleton, or the like are attached to macromolecular main chains 411 of, for example, polyimide or polysiloxane. The macromolecular side chains 511 protrude from a surface of the orientation film 41-1 and from the macromolecular main chains 411 in such a manner as a frog for flower arrangement (in the vertical direction in FIG. 6 (A)).

As depicted in FIG. 6(B), with an orientation film orientation method in the first example, macromolecular side chains 512 protrude from a surface of an orientation film 41-2 and from macromolecular main chains 412 in such a manner as a frog for flower arrangement (in the vertical direction in FIG. 6(B)), and molecules 612 in contact with the macromolecular side chains 512 are aligned after the manner of the macromolecular side chains 512 (in the vertical direction in FIG. 6(B)). It is noted that FIG. 6(B) depicts a view in a monomer state in which the molecules 612 contained in a layer 51-2 formed on the orientation film 41-2 are in the middle of forming the layer 51-2.

The three-dimensional structure manufacturing method in the first example will be described with reference to FIG. 7. According to the three-dimensional structure manufacturing method in the first example, an orientation film is formed (orientation film forming process) in FIGS. 7(A) to 7(C) and 7(G), and a layer is formed (process for forming a layer) in FIGS. 7(D) to7 (F) .

The orientation film 31(3) is applied onto the base material 1 in an arrow P71 direction in FIG. 7(A), and the orientation film 31(3) is subjected to prebaking and burning (imidized in the case of, for example, the polyimide material) to produce the orientation film 32(3) in FIG. 7(B). In FIG. 7(C), the orientation process on the orientation film 32(3) is not performed.

In FIG. 7(D), the layer 21(2) is formed on the orientation film 32(3) in an arrow P72 direction. In FIGS. 7(D) and 7(E), molecules contained in the layer are solidified with the UV light to form a polymer. It is noted that the molecular orientation process on the layer is not performed in FIGS. 7(D) and 7(E). In FIG. 7(F), the molecules contained in the layer are reoriented (layer 23(2)) by heating or the like as needed.

In FIG. 7(G) (same as FIG. 7(A)), the orientation film 31(3) is applied again onto the layer 21(2) (23(2)) in an arrow P73 direction, and a desired three-dimensional structure is manufactured by repeating FIGS.7(G) (7(A)) and 7(B) to 7(F) a predetermined number of times.

<Second Example>

[Three-dimensional structure manufacturing method including: forming an orientation film; performing an orientation process on the orientation film; and forming a layer]

A second example will be described with reference to FIGS. 8 and 9. FIGS. 8(A) to 8(C) are diagrams for explaining that an orientation process is performed on an orientation film and molecules contained in a layer can be oriented. FIG. 9 depicts explanatory diagrams of a three-dimensional structure manufacturing method including: forming an orientation film; performing an orientation process on the orientation film; and forming a layer.

The three-dimensional structure manufacturing method in the second example is a method of orienting molecules in contact with an orientation film by performing an orientation process on the orientation film. Examples of the orientation process performed on the orientation film include the rubbing method, the photo-orientation method, the ion-beam method, and the like. Imparting anisotropy to the macromolecular main chains or the macromolecular side chains of the orientation film by any of these orientation methods and forming a layer after performing the orientation process make it possible to align the molecules contained in the formed layer in a bearing specified by the orientation process.

In FIG. 8(A), the rubbing method is used as the orientation process on the orientation film. An orientation film 42-1 configured from macromolecular main chains 421 (of, for example, polyimide) and macromolecular side chains 521 is rubbed with a cloth wrapped around a roller 62-1 in an arrow Q8 direction.

In FIG. 8(B), in an orientation film 42-2 configured from macromolecular main chains 422 and macromolecular side chains 522, the macromolecular side chains 522 are arranged uniformly in a generally constant bearing (transverse direction in FIG. 8(B)) by the rubbing method.

As depicted in FIG. 8(C), molecules 623 contained in a layer 52-3 formed on an orientation film 42-3 configured from macromolecular main chains 423 and macromolecular side chains 523 can be aligned in a bearing (transverse direction in FIG. 8(C)) specified by the macromolecular side chains 522.

The three-dimensional structure manufacturing method in the second example will be described with reference to FIG. 9. According to the three-dimensional structure manufacturing method in the second example, an orientation film is formed to perform an orientation process on the orientation film (molecular orientation process) (orientation film forming process) in FIGS. 9(A) to 9(C) and 9(G), and a layer is formed (process for forming a layer) in FIGS. 9(D) to 9(F).

The orientation film 31(3) is applied onto the base material 1 in an arrow P91 direction in FIG. 9(A), and the orientation film 31(3) is subjected to prebaking and burning (imidized in the case of, for example, the polyimide material) to produce the orientation film 32(3) in FIG. 9(B).

In FIG. 9(C), the rubbing method is used in such a manner that a roller 62-C is rotated in an arrow Q9 direction, the orientation film 32(3) is rubbed with a cloth wrapped around the roller 62-C in an arrow P92 direction, and the orientation film 33(3) having been subjected to the molecular orientation process is formed.

In FIG. 9(D), the layer 21(2) is formed on the orientation film 33(3) in an arrow P93 direction. In FIGS. 9(D) and 9(E), molecules contained in the layer are solidified with the UV light to form a polymer. It is noted that the molecular orientation process on the layer is not performed in FIGS. 9(D) and 9(E). In FIG. 9(F), the molecules contained in the layer are reoriented (layer 23(2)) by heating or the like as needed.

In FIG. 9(G) (same as FIG. 9(A)), the orientation film 31(3) is applied again onto the layer 21(2) (23(2)) in an arrow P94 direction, and a desired three-dimensional structure is manufactured by repeating FIGS.9(G) (9(A)) and 9(B) to 9(F) a predetermined number of times.

<Third Example>

[Three-dimensional structure manufacturing method including: forming an orientation film; forming a layer; and orienting molecules]

A third example will be described with reference to FIGS. 10 to 12. FIG. 10 depicts diagrams depicting a structural change of azobenzene accompanying light irradiation or heat. FIGS. 11(A) to 11(C) are diagrams for explaining that molecules contained in a layer are oriented without performing an orientation process on an orientation film and molecules can be further oriented through orientation of the molecules. FIG. 12 depicts explanatory diagrams of a three-dimensional structure manufacturing method including: forming an orientation film; forming a layer; and orienting molecules.

Examples of a molecular structure for controlling a molecular orientation state in the layer include that of a photochromic material such as azobenzene or stilbene depicted in FIG. 10. The photochromic material may be bonded as macromolecular main chains or macromolecular side chains for forming a layer or may be distributed as monomers or single molecules apart from monomers and polymers as principal components.

In the third example, azobenzene depicted in FIG. 10 is used. As depicted in FIG. 10, trans-azobenzene (FIG. 10(A) is structurally changed to cis-azobenzene (FIG. 10(B)) by the UV light. Furthermore, the cis-azobenzene (FIG. 10(B)) is structurally changed to the trans-azobenzene (FIG. 10(A)) by the visible light or the heat.

While the third example is the same as the first example described above in that the orientation film can orient molecules without the need to perform the orientation process on the orientation film, the third example differs from the first example in that performing the molecular orientation process on the layer to be subsequently formed makes it possible to further control a molecular orientation state of the molecules contained in the layer.

As depicted in FIG. 11(A), an orientation film 43-1 used in the third example is an orientation film that can orient molecules without performing the orientation process. Macromolecular side chains 531 that are, for example, alkyl chains, side chains of the cholesterol skeleton, or the like are attached to macromolecular main chains 431 of, for example, polyimide or polysiloxane. The macromolecular side chains 531 protrude from a surface of the orientation film 43-1 and from the macromolecular main chains 431 in such a manner as a frog for flower arrangement (in the vertical direction in FIG. 11(A)).

As depicted in FIG. 11(B), with an orientation film orientation method in the third example, macromolecular side chains 532 protrude from a surface of an orientation film 43-2 and from macromolecular main chains 432 in such a manner as a frog for flower arrangement (in the vertical direction in FIG. 11(B)), and molecules 632 and trans-azobenzene 732 in contact with the macromolecular side chains 532 are aligned after the manner of the macromolecular side chains 532 (in the vertical direction in FIG. 11(B)). It is noted that FIG. 11(B) depicts a view in a monomer state in which the molecules 632 contained in a layer 53-2 formed on the orientation film 43-2 are in the middle of forming the layer 53-2.

Next, as depicted in FIG. 11(C), ultraviolet radiation (hv) R11 is emitted to a layer 52-3 formed on an orientation film 43-3 configured from macromolecular main chains 433 and macromolecular side chains 533 as the molecular orientation process, and azobenzene is structurally changed to cis-azobenzene 733, so that a molecular orientation state of molecules 633 can be freely controlled. In FIG. 11(C), the molecules 633 are oriented in a vertical bearing in accordance with the macromolecular side chains 532 and cis-azobenzene 733 near the orientation film near the orientation film, and the molecules 633 turns into a state of being gradually oriented in a bearing from lower left to upper right (oblique bearing) as the molecules 633 are farther from the orientation film. It is noted that FIG. 11(C) is a view depicting that a reaction of the structural change between the trans-azobenzene and the cis-azobenzene is ongoing.

The three-dimensional structure manufacturing method in the third example will be described with reference to FIG. 12. According to the three-dimensional structure manufacturing method in the third example, an orientation film is formed (orientation film forming process) in FIGS. 12(A) to 12(C) and 12(J), a layer is formed (process for forming a layer) in FIGS. 12(D) to 12(F), and molecules contained in the layer are oriented (process for orienting molecules) in FIGS. 12(G) to 12(I).

The orientation film 31(3) is applied onto the base material 1 in an arrow P121 direction in FIG. 12(A), and the orientation film 31(3) is subjected to prebaking and burning (imidized in the case of, for example, the polyimide material) to produce the orientation film 32(3) in FIG. 12(B). In FIG. 12(C), the orientation process on the orientation film 32(3) is not performed.

In FIGS. 12(D) and 12(E), the layer 21(2) is formed on the orientation film 32(3) in an arrow P122 direction. In FIG. 12(F), molecules contained in the layer are reoriented (layer 23(2)) by heating or the like as needed.

Next, in FIGS. 12(G) and 12(H), the photo-orientation process is performed on the layer 21(2) (or layer 23(2)) in an arrow P123 direction to produce the layer 24(2) in the controlled molecular orientation state. Furthermore, in FIG. 12(1), the molecules contained in the layer are reoriented (layer 25(2)) by heating or the like as needed.

In FIG. 12(J) (same as FIG. 12(A)), the orientation film 31(3) is applied again onto the layer 24(2) (layer 25(2)) in an arrow P124 direction, and a desired three-dimensional structure is manufactured by repeating FIGS. 12(J) (12(A)) and 12(B) to 12(1) a predetermined number of times.

<Fourth Example not according to the claimed invention>

[Three-dimensional structure manufacturing method including: forming a layer; and orienting molecules]

A fourth example not according to the claimed invention will be described with reference to FIGS. 10, 13, and 14. FIG. 10 is already described above. FIGS. 13(A) and 13(B) are diagrams for explaining that molecules contained in a layer can be oriented through orientation of the molecules. FIG. 14 depicts explanatory diagrams of a three-dimensional structure manufacturing method including forming a layer and orienting molecules.

The three-dimensional structure manufacturing method in the fourth example does not use an orientation film. With this manufacturing method, a layer is directly formed on a base material in a state in which an orientation film is not present, and molecules contained in the layer changes from a random orientation state to a state of being oriented by the molecular orientation process.

In FIG. 13(A), molecules 641 and cis-azobenzene 741 are contained in a layer 54-1 in a random orientation state.

Next, as depicted in FIG. 13(B), visible light (hv') R13 is emitted to a layer 54-2 as the molecular orientation process, and azobenzene is structurally changed to trans-azobenzene 742, so that a molecular orientation state of molecules 642 can be freely controlled. In FIG. 13(B), the molecules 642 are in a state of being oriented in a bearing from lower left to upper right.

The three-dimensional structure manufacturing method in the fourth example will be described with reference to FIG. 14. According to the three-dimensional structure manufacturing method in the fourth example, layers are formed (process for forming layers) in FIGS. 14(A), 14(C), and 14(E), and molecules contained in the layers are oriented (process for orienting molecules) in FIGS. 14(B), 14(D), and 14(F).

The first layer 21(2) is formed on the base material 1 in an arrow P141 direction in FIG. 14(A), and the photo-orientation process is performed on the first layer 21(2) in an arrow P142 direction in FIG. 14(B) to produce the layer 22(2) in the controlled molecular orientation state. Next, the second layer 21(2) is formed on the first layer 22(2) in an arrow P143 direction in FIG. 14(C), and the photo-orientation process is performed on the second layer 21(2) in an arrow P144 direction in FIG. 14(D) to produce the two layers 22(2) in the controlled molecular orientation state. Furthermore, the third layer 21(2) is formed on the second layer 22(2) in an arrow P145 direction in FIG. 14(E), and the photo-orientation process is performed on the third layer 21(2) in an arrow P146 direction in FIG. 14(F) to produce the three layers 22(2) in the controlled molecular orientation state.

A desired three-dimensional structure is manufactured by repeating FIGS. 14(A) to 14(F) a predetermined number of times.

<Fifth Example>

[Three-dimensional structure manufacturing method including: forming an orientation film; performing an orientation process on the orientation film; forming a layer; and orienting molecules]

A fifth example will be described with reference to FIGS. 15 to 17. FIG. 15 depicts diagrams depicting a cross-linking reaction of a compound (polyvinyl cinnamate) having a cross-linkable functional group by the UV light. FIG. 16 depicts diagrams for explaining that molecules are oriented by performing the orientation process on an orientation film and molecules can be further oriented through orientation of the molecules contained in a layer. FIG. 17 depicts explanatory diagrams of a three-dimensional structure manufacturing method including: forming an orientation film; performing an orientation process on the orientation film; forming a layer; and orienting molecules.

In the fifth example, polyvinyl cinnamate depicted in FIG. 15(A) is used. Polyvinyl cinnamate is an example of the compound having the cross-linkable functional group. As depicted in FIG. 15(A), the cinnamate compound is subjected to cross-linking by the UV light and changed to a compound having a skeleton of a four-membered ring as depicted in FIG. 15(B). Molecules can be aligned by a skeleton around the four-membered ring of the compound depicted in FIG. 15(B). Furthermore, the UV light (ultraviolet light) radiated at this time is suitable since the UV light that is the linearly polarized light can align molecules in good order.

The fifth example is an example of a combination of the orientation process on the oriented film in the second example and the molecular orientation process on the layer in the third example. According to the fifth example, combining the orientation process on the oriented film with the molecular orientation process on the layer makes it possible to align molecules in good order while further ensuring a degree of freedom in molecular orientation. While the method of using the photoisomerization of the photochromic material which is, for example, azobenzene or the like has been described in the molecular orientation process on the layer in the third example, a course of reorienting molecules by formation of a four-membered ring by polyvinyl cinnamate described above will be described as another example.

In FIG. 16(A), the rubbing method is used as the orientation process on the orientation film. An orientation film 45-1 configured from macromolecular main chains 451 (of, for example, polyimide) and macromolecular side chains 551 is rubbed with a cloth wrapped around a roller 62-1 in an arrow Q16 direction.

In FIG. 16(B), in an orientation film 45-2 configured from macromolecular main chains 452 and macromolecular side chains 552, the macromolecular side chains 552 are arranged regularly in a generally constant bearing (transverse direction in FIG. 16(B)) by the rubbing method.

As depicted in FIG. 16(C), molecules 653 contained in a layer 55-3 formed on an orientation film 45-3 configured from macromolecular main chains 453 and macromolecular side chains 553 can be aligned in a bearing (transverse direction in FIG. 16(C)) specified by the macromolecular side chains 553.

Next, as depicted in FIG. 16(D), ultraviolet radiation (hv) R16 is emitted to a layer 55-4 formed on an orientation film 45-4 configured from macromolecular main chains 454 and macromolecular side chains 554 as the molecular orientation process, and a cross-linked cinnamate 854 configured from cinnamates 854-1 and 854-2 via a cross-linking bond (cross-linking point) 854B efficiently orients molecules, so that a molecular orientation state of molecules 654 can be freely controlled to accompany the cross-linked cinnamate 854. In FIG. 16(D), the molecules 654 are in a state of being oriented in the bearing from lower left to upper right to accompany the cross-linked cinnamate 854.

The three-dimensional structure manufacturing method in the fifth example will be described with reference to FIG. 17. According to the three-dimensional structure manufacturing method in the fifth example, an orientation film is formed (orientation film forming process) in FIGS. 17(A) to 17(C) and 17(J), a layer is formed (process for forming a layer) in FIGS. 17(D) to 17(F), and molecules contained in the layer are oriented (process for orienting molecules) in FIGS. 17(G) to 17(I).

The orientation film 31(3) is applied onto the base material 1 in an arrow P171 direction in FIG. 17(A), and the orientation film 31(3) is subjected to prebaking and burning (imidized in the case of, for example, the polyimide material) to produce the orientation film 32(3) in FIG. 17(B).

In FIG. 17(C), the rubbing method is used in such a manner that a roller 65-C is rotated in an arrow Q17 direction, the orientation film 32(3) is rubbed with a cloth wrapped around the roller 65-C in an arrow P172 direction, and the orientation film 33(3) having been subjected to the molecular orientation process is formed.

In FIGS. 17(D) and 17(E), the layer 21(2) is formed on the orientation film 33(3) in an arrow P173 direction. In FIG. 17(F), molecules contained in the layer are reoriented (layer 23(2)) by heating or the like as needed.

Next, in FIGS. 17(G) and 17(H), the photo-orientation process is performed on the layer 21(2) (or layer 23(2)) in an arrow P174 direction to produce the layer 24(2) in the controlled molecular orientation state. Furthermore, in FIG. 17(1), the molecules contained in the layer are reoriented (layer 25(2)) by heating or the like as needed.

In FIG. 17(J) (same as FIG. 17(A)), the orientation film 31(3) is applied again onto the layer 24(2) (layer 25(2)) in an arrow P175 direction, and a desired three-dimensional structure is manufactured by repeating FIGS. 17(J) (17(A)) and 17(B) to 17(1) a predetermined number of times.

<Sixth Example not according to the claimed invention>

[Three-dimensional structure manufacturing method including: forming a layer; and orienting molecules]

A sixth example not according to the claimed invention will be described with reference to FIGS. 18 and 19. FIGS. 18(A) and 18(B) are diagrams for explaining that molecules contained in a layer can be oriented through orientation of the molecules. FIG. 19 depicts explanatory diagrams of a three-dimensional structure manufacturing method including forming a layer and orienting molecules.

Description will be given with reference to FIGS. 18(A) and 18(B). In the sixth example, a three-dimensional polymerized compound is created by building up a layer 56 (56-1, 56-2) containing an acrylic material on the base material (not depicted in FIGS. 18(A) and 18(B)).

In FIG. 18(A), the layer 56-1 contains molecules 661 and polyvinyl cinnamate 861 in a random orientation state. A material used for the layer 56 (56-1, 56-2) to be built up is a mixture containing, as a base, unsaturated fatty acid hydroxyalkyl ester-modified ε-caprolactone ($CH_2 = CHCOO(CH_2)_2O[CO(CH_2)_5O]_nH$) (not depicted), and configured from liquid-crystalline monomers 661, polyvinyl cinnamate 861, and a polymerization initiator (not depicted). These are mixed at a predetermined ratio and a built-up structure (three-dimensional structure) is produced by the STL (Stereo lithography) scheme.

Next, as depicted in FIG. 18(B), ultraviolet radiation (hv) R18 is emitted to the layer 56-2 as the molecular orientation process, and optical anisotropy of a polymerized compound 662 configured from liquid-crystalline monomers 662-1, 662-2, and the like is expressed to accompany molecular orientation of cross-linked cinnamate 862. In FIG. 18(B), the liquid-crystalline monomer components 662-1, 662-2, and the like are in a state of being oriented in the bearing from lower left to upper right.

In a 3D printer of the STL scheme used in the sixth example, a polarizing plate is attached to a laser that irradiates the material with light, and the light with which the material is irradiated is linearly polarized light. As described above, by irradiating the material with the linearly polarized light, the cross-linked cinnamate 862 efficiently performs molecular orientation, and the liquid-crystalline monomer components 662-1 and 662-2 are oriented accordingly. At the same time, the polymerized compound 662 configured from the liquid-crystalline monomers 662-1, 662-2, and the like is formed by radicals generated from the polymerization initiator. The obtained polymerized compound 662 has optical anisotropy and can, therefore, change a polarization state of the incident light. It is noted that the polymerized compound 662 is configured from the liquid-crystalline monomers 662-1 and 662-2 configured via a bond 662B, and the like.

The three-dimensional structure manufacturing method in the sixth example will be described with reference to FIG. 19. According to the three-dimensional structure manufacturing method in the sixth example, layers are formed (process for forming layers) in FIGS. 19(A) and 14(C), and molecules contained in the layers are oriented (process for orienting molecules) in FIGS. 19(B) and 19(D).

The first layer 21(2) is formed on the base material 1 in an arrow P191 direction in FIG. 19(A), and the photo-orientation process is performed on the first layer 21(2) in an arrow P192 direction in FIG. 19(B) to produce the layer 22(2) in the controlled molecular orientation state. Next, the second layer 21(2) is formed on the first layer 22(2) in an arrow P193 direction in FIG. 19(C), and the photo-orientation process is performed on the second layer 21(2) in an arrow P194 direction in FIG. 19(D) to produce the two layers 22(2) in the controlled molecular orientation state.

A desired three-dimensional structure is manufactured by repeating FIGS. 19(A) to 19(D) a predetermined number of times.

<Seventh Example>

[Three-dimensional structure manufacturing method including: forming an orientation film; performing an orientation process on the orientation film; forming a layer; and orienting molecules]

A seventh example will be described with reference to FIGS. 20 and 21. FIGS. 20(A) to 20(E) are diagrams for explaining that molecules contained in a layer are oriented by performing an orientation process on an orientation film and the molecules can be further oriented through orientation of the molecules. FIG. 21 depicts explanatory diagrams of a three-dimensional structure manufacturing method including: forming an orientation film; performing an orientation process on the orientation film; forming a layer; and orienting molecules.

Description will be given with reference to FIGS. 20(A) to 20(E).

In FIG. 20(A), a perpendicular orientation film 47-1 is applied onto the base material (not depicted in FIGS. 20(A) to 20(E)), a solvent is removed by prebaking, and then the orientation film 47-1 is burned in an oven at 200°C for one hour. This is intended to increase an imidization rate of soluble polyimide (configured from polyimide main chains 471 and polyimide side chains 571). Increasing the imidization rate can contribute to improving an abrasion resistance in an orientation processing step.

After forming the perpendicular orientation film 47-1, the orientation process is performed on an orientation film 47-2 by the rubbing method as depicted in FIG. 20(B) to set a bearing. Setting a bearing means that polyimide side chains 572 are inclined, for example, in the transverse direction in FIG. 20(B) from the perpendicular direction (upward direction in FIG. 20(B)) although not accurately depicted in FIG. 20(B). The rubbing method is a method of rubbing the orientation film 47-2 configured from polyimide main chains 472 and the polyimide side chains 572 in an arrow Q20 direction with, for example, a cloth wrapped around a roller 67-2.

In FIG. 20(C), a layer 57-3 containing an acrylic material is built up on an orientation film 47-3 having been subjected to the orientation process and configured from polyimide main chains 473 and polyimide side chains 573. A material used for the layer 57-3 to be built up is a mixture containing, as a base, unsaturated fatty acid hydroxyalkyl ester-modified $\varepsilon$-caprolactone ($CH_2 = CHCOO\ (CH_2)_2O[CO(CH_2)_5O]_nH$) (not depicted), and configured from liquid-crystalline monomer molecules 673, azobenzene (trans-azobenzene) 773 that is a photochromic material, and the polymerization initiator (not depicted). These are mixed at a predetermined ratio and a built-up structure (three-dimensional structure) is produced by the STL (Stereo lithography) scheme.

Next, as depicted in FIG. 20(D), ultraviolet radiation (hv) R20 is emitted to a layer 57-4 as the molecular orientation process, and azobenzene is structurally changed to cis-azobenzene 774, so that a molecular orientation state of molecules 674 can be freely controlled in accordance with the structural change. In FIG. 20(D), the molecules 674 are oriented in a vertical bearing in accordance with the macromolecular side chains 574 and cis-azobenzene 774 near the orientation film, while the molecules 674 turns into a state of being gradually oriented in a bearing from lower left to upper right (oblique bearing) as the molecules 674 are farther from the orientation film. It is noted that FIG. 20(D) is a view depicting that the reaction of the structural change between the trans-azobenzene and the cis-azobenzene is ongoing.

In the 3D printer of the STL scheme used in the seventh example, the polarizing plate is attached to the laser that irradiates the layer with light, and the light with which the material is irradiated is linearly polarized light. As described above, by irradiating the material with the linearly polarized light, the photochromic material such as azobenzene efficiently performs molecular orientation, liquid-crystalline monomers are oriented accordingly.

As depicted in FIG. 20(E), the UV light radiation (hv) S20 is emitted to a layer 57-5 formed on an orientation film 47-5 configured from polyimide main chains 475 and polyimide side chains 575, and a polymerized compound 675 configured from liquid-crystalline monomer components 675-1, 675-2, and the like is formed by radicals generated from the initiator (not depicted). The obtained polymerized compound 675 has optical anisotropy and can, therefore, change the polarization state of the incident light. It is noted that the polymerized compound 675 is configured from the liquid-crystalline monomers 662-1 and 662-2 configured via bonds 675B, and the like.

The three-dimensional structure manufacturing method in the seventh example will be described with reference to FIG. 21. According to the three-dimensional structure manufacturing method in the seventh example, an orientation film is formed (orientation film forming process) in FIGS. 21(A) to 21(C) and 21(J), a layer is formed (process for forming a layer) in FIGS. 21(D) to 21(F), and molecules contained in the layer are oriented (process for orienting molecules) in FIGS. 21(G) to 21(I) .

The orientation film 31(3) is applied onto the base material 1 in an arrow P211 direction in FIG. 21(A), and the orientation film 31(3) is subjected to prebaking and burning (imidized in the case of, for example, the polyimide material) to produce the orientation film 32(3) in FIG. 21(B).

In FIG. 21(C), the rubbing method is used in such a manner that the orientation film 32(3) is rubbed with a cloth wrapped around a roller 67-C in an arrow P212 direction, and the orientation film 33(3) having been subjected to the molecular orientation process is formed.

In FIGS. 21(D) and 21(E), the layer 21(2) is formed on the orientation film 33(3) in an arrow P213 direction. In FIG. 21(F), molecules contained in the layer are reoriented (layer 23(2)) by heating or the like as needed.

Next, in FIGS. 21(G) and 21(H), the photo-orientation process is performed on the layer 21(2) (or layer 23(2)) in an arrow P214 direction to produce the layer 24(2) in the controlled molecular orientation state. Furthermore, in FIG. 21(1), molecules contained in the layer are reoriented (layer 25(2)) by heating or the like as needed.

In FIG. 21(J) (same as FIG. 21(A)), the orientation film 31(3) is applied again onto the layer 24(2) (layer 25(2)) in an arrow P215 direction, and a desired three-dimensional structure is manufactured by repeating FIGS. 21(J) (21(A)) and 21(B) to 21(1) a predetermined number of times.

<Eighth Example not according to the claimed invention>

[Three-dimensional structure manufacturing method not according to the claimed invention including: forming an orientation film; performing an orientation process on the orientation film; and forming a layer]

An eighth example will be described with reference to FIGS. 22 and 23. FIGS. 22(A) to 22(D) are diagrams for explaining that an orientation process is performed on an orientation film and molecules contained in a layer can be oriented. FIG. 23 depicts explanatory diagrams of a three-dimensional structure manufacturing method including: forming an orientation film; performing an orientation process on the orientation film; and forming a layer.

Description will be given with reference to FIGS. 22 (A) to 22 (D).

An orientation film is applied onto the base material, a solvent is removed by prebaking, and then the orientation film is burned in an oven at 200°C for one hour. This is intended to increase an imidization rate of a soluble polyimide. Increasing the imidization rate can contribute to improving an abrasion resistance in an orientation processing step.

After forming the orientation film, the orientation process is performed on an orientation film 48-1 configured from polyimide main chains 481 and polyimide side chains 581 by the rubbing method as depicted in FIG. 22(A). The rubbing method is a method of rubbing the orientation film 48-1 configured from the polyimide main chains 481 and the polyimide side chains 581 in an arrow Q22 direction with, for example, a cloth wrapped around a roller 68-1.

As depicted in FIG. 22(B), the orientation process based on the rubbing method enables the polyimide side chains 582 to be arranged uniformly in a horizontal direction on an orientation film 48-2 configured from polyimide main chains 482 and the polyimide side chains 582.

In FIG. 22(C), a layer 58-3 containing an acrylic material is built up on an orientation film 48-3 having been subjected to the orientation process and configured from polyimide main chains 483 and polyimide side chains 583. A material used for the layer 58-3 to be built up is a mixture containing, as a base, unsaturated fatty acid hydroxyalkyl ester-modified $\varepsilon$-caprolactone ($CH_2 = CHCOO (CH_2)_2O[CO(CH_2)_5O]_nH$) (not depicted), and configured from chiral molecule-containing liquid-crystalline monomer compositions 683-1 to 683-4, and the polymerization initiator (not depicted). These are mixed at a predetermined ratio and a built-up structure (three-dimensional structure) is produced by the STL (Stereo lithography) scheme.

As described above, chiral molecules are mixed into the blended materials, and the liquid-crystalline monomer compositions 683-1 to 683-4 are thereby spontaneously, spirally oriented. At this time, heat is applied to reduce a viscosity of a compound before polymerization to facilitate orienting molecules. As the heating, the heat is applied from the platform (or container) to set a temperature to 50°C. If the temperature is excessively increased (to, for example, be equal to or higher than 100°C), acrylic monomers possibly start reacting. The temperature is set to a room temperature + 20°C to 30°C so as to slightly reduce the viscosity. The temperature is, however, set to be lower than a liquid crystal phase transition temperature. This is because if the temperature is higher than the liquid crystal phase transition temperature, a liquid crystal material is changed to a liquid, which makes it impossible to align the molecules.

Next, in FIG. 22(D), the layer 58-4 is irradiated with the UV light as indicated by an arrow S22 (hv) to cause a reaction of acryloyl groups. A polymerized compound 684 configured from liquid-crystalline monomers 684-1 to 684-4 is formed by radicals generated from the initiator by the UV light. Heat is further applied (by, for example, performing annealing) to accelerate molecular orientation. The obtained polymerized compound 684 exhibits a photophysical property of selective reflection and has a property of reflecting light of a wavelength corresponding to a spiral structure as circularly polarized light. This can enhance design of the obtained polymerizable compound 684.

The three-dimensional structure manufacturing method in the eighth example will be described with reference to FIG. 23. According to the three-dimensional structure manufacturing method in the eighth example, an orientation film is formed to perform an orientation process on the orientation film (molecular orientation process) (orientation film forming process) in FIGS. 23(A) to 23(C) and 23(G), and a layer is formed (process for forming a layer) in FIGS. 23(D) to 23(F).

The orientation film 31(3) is applied onto the base material 1 in an arrow P231 direction in FIG. 23(A), and the orientation film 31(3) is subjected to prebaking and burning (imidized in the case of, for example, the polyimide material) to produce the orientation film 32(3) in FIG. 23(B).

In FIG. 23(C), the rubbing method is used in such a manner that a roller 68-C is rotated in an arrow Q23 direction, the orientation film 32(3) is rubbed with a cloth wrapped around the roller 68-C in an arrow P232 direction, and the orientation film 33(3) having been subjected to the molecular orientation process is formed.

In FIG. 23(D), the layer 21(2) is formed on the orientation film 33(3) in an arrow P233 direction. In FIG. 23(E), the layer is irradiated with the UV light in an arrow S23 direction to solidify molecules (monomers) contained in the layer and to form a polymer (polymerized compound) (layer 26(2)). In FIG. 23(F), the molecules contained in the layer are reoriented (layer 27(2)) by annealing as needed.

In FIG. 23(G) (same as FIG. 23(A)), the orientation film 31(3) is applied again onto the layer 26(2) (layer 27(2)) in an arrow P234 direction, and a desired three-dimensional structure is manufactured by repeating FIGS. 23(G) (23(A)) and 23(B) to 23(F) a predetermined number of times.

[Reference Signs List]

1: Base material
2, 21, 22, 23, 24, 25: Layer
3, 31, 32, 33: Orientation film

**Claims**

1.  A three-dimensional structure manufacturing method comprising:

    forming an orientation film (3, 31-33);
    forming a layer (2, 21-25) containing at least one type of chemical substance; and
    orienting molecules of the at least one type of chemical substance, wherein:

    the forming the orientation film (3, 31-33), the forming the layer (2, 21-25), and the orienting the molecules
    are repeated a plurality of times; and **characterized in that**
    the at least one type of chemical substance contains molecules each having a chiral molecular skeleton.

2.  The three-dimensional structure manufacturing method according to claim 1, wherein:
    an orientation process is performed on the formed orientation film (3, 31-33).

3.  The three-dimensional structure manufacturing method according to claim 1, wherein:
    the molecules are oriented after the forming the layer (2, 21-25) is repeated a plurality of times.

4.  The three-dimensional structure manufacturing method according to claim 3, wherein:
    an orientation process is performed on the formed orientation film (3, 31-33).

5.  A three-dimensional structure obtained by the manufacturing method according to claim 1 and containing a chemical
    substance having at least one type of anisotropy.

**Patentansprüche**

1.  Dreidimensionale-Struktur-Herstellungsverfahren, umfassend:

    Bilden eines Orientierungsfilms (3, 31-33);
    Bilden einer Schicht (2, 21-25), die wenigstens einen Typ von chemischem Stoff enthält; und
    Orientieren von Molekülen des wenigstens einen Typs von chemischem Stoff, wobei:

    das Bilden des Orientierungsfilms (3, 31-33), das Bilden der Schicht (2, 21-25) und das Orientieren der
    Moleküle mehrmals wiederholt werden; und
    **dadurch gekennzeichnet, dass**
    der wenigstens eine Typ von chemischem Stoff Moleküle enthält, die jeweils ein chirales Molekülgerüst
    aufweisen.

2.  Dreidimensionale-Struktur-Herstellungsverfahren gemäß Anspruch 1, wobei:
    an dem gebildeten Orientierungsfilm (3, 31-33) ein Orientierungsverfahren durchgeführt wird.

3.  Dreidimensionale-Struktur-Herstellungsverfahren gemäß Anspruch 1, wobei:
    das Orientieren der Moleküle nach dem Bilden der Schicht (2, 21-25) mehrmals wiederholt wird.

4.  Dreidimensionale-Struktur-Herstellungsverfahren gemäß Anspruch 3, wobei:
    an dem gebildeten Orientierungsfilm (3, 31-33) ein Orientierungsverfahren durchgeführt wird.

5.  Dreidimensionale Struktur, erhalten durch das Herstellungsverfahren gemäß Anspruch 1 und enthaltend einen chemischen Stoff mit wenigstens einem Typ von Anisotropie.

**Revendications**

1. Procédé de fabrication d'une structure tridimensionnelle comprenant :

   la formation d'un film d'orientation (3, 31-33) ;
   la formation d'une couche (2, 21-25) contenant au moins un type de substance chimique ; et
   l'orientation de molécules de l'au moins un type de substance chimique,
   la formation du film d'orientation (3, 31-33), la formation de la couche (2, 21-25) et l'orientation des molécules
   étant répétées une pluralité de fois ; et
   **caractérisé en ce que**
   l'au moins un type de substance chimique contient des molécules possédant chacune un squelette moléculaire
   chiral.

2. Procédé de fabrication d'une structure tridimensionnelle selon la revendication 1,
   un processus d'orientation étant réalisé sur le film d'orientation (3, 31-33) formé.

3. Procédé de fabrication d'une structure tridimensionnelle selon la revendication 1,
   les molécules étant orientées après que la formation de la couche (2, 21-25) a été répétée une pluralité de fois.

4. Procédé de fabrication d'une structure tridimensionnelle selon la revendication 3,
   un processus d'orientation étant réalisé sur le film d'orientation (3, 31-33) formé.

5. Structure tridimensionnelle obtenue par le procédé de fabrication selon la revendication 1 et contenant une substance
   chimique ayant au moins un type d'anisotropie.

# FIG.1

PROCESS FOR FORMING LAYERS

PROCESS FOR
ORIENTING MOLECULES

# F I G . 2

PROCESS FOR FORMING LAYERS

PROCESS FOR ORIENTING MOLECULES

(A)

21(2) P21

21(2)

1

(B)

P22 PHOTO-ORIENTATION

21(2)

21(2)

22(2)
22(2)

1

(C)

P23

22(2)

21(2)
21(2)
22(2)

1

(D)

P24 PHOTO-ORIENTATION

21(2)

21(2)

22(2)

22(2)
22(2)
22(2)

1

# FIG.3

| PROCESS FOR FORMING ORIENTATION FILM | PROCESS FOR FORMING LAYERS | PROCESS FOR ORIENTING MOLECULES |

(A) APPLY ORIENTATION FILM
P31 31(3)

PERFORM PREBAKING AND BURNING

(B) 32(3)

PERFORM MOLECULAR ORIENTATION PROCESS

PHOTO-ORIENTATION

(C) 32(3) P32 33(3)

RE-PERFORM ORIENTATION FILM APPLICATION PROCESS

(D) FORM LAYER
P33 21(2) 33(3)

(E) 21(2) 33(3)

PERFORM REORIENTATION (HEATING)

(F) 23(2) 33(3)

PHOTO-ORIENTATION

(G) 23(2) P34 24(2) 33(3)

(H) 24(2) 33(3)

PERFORM REORIENTATION (HEATING)

(I) 25(2) 33(3)

(J) 33(3) P35 31(3) 25(2)

TO BE CONTINUED WITH MOLECULAR ORIENTATION PROCESS

EP 3 677 408 B1

# FIG.4

PROCESS FOR FORMING
ORIENTATION FILM

PROCESS FOR FORMING LAYERS

(A) APPLY ORIENTATION FILM

P41    31(3)

PERFORM PREBAKING AND BURNING

(B)    32(3)

PERFORM MOLECULAR
ORIENTATION PROCESS

PHOTO-ORIENTATION
32(3)    P42    33(3)

(C)

RE-PERFORM ORIENTATION
FILM APPLICATION PROCESS 31(3)
21(2)(23(2))  P44    33(3)

(G)

TO BE CONTINUED WITH
MOLECULAR ORIENTATION PROCESS

(D) FORM LAYER    21(2)    33(3)
P43

(E)    21(2)    33(3)

PERFORM REORIENTATION (HEATING)

23(2)
33(3)

(F)

# FIG.5

PROCESS FOR FORMING
ORIENTATION FILM

PROCESS FOR FORMING LAYERS

(A) APPLY ORIENTATION FILM
P51
31(3)
1

(D)
P53
21(2)
33(3)
1

PERFORM PREBAKING AND BURNING

FORM A PLURALITY OF LAYERS

(B)
32(3)
1

(E)
33(3)
P54
21(2)
21(2)
1

PERFORM MOLECULAR
ORIENTATION PROCESS

PHOTO-ORIENTATION
P52
(C)
32(3)
33(3)
1

PERFORM REORIENTATION (HEATING)
(F)
33(3)
23(2)
23(2)
1

RE-PERFORM ORIENTATION
FILM APPLICATION PROCESS
31(3)
33(3)
P55
21(2)(23(2))
(G)
21(2)(23(2))
1

TO BE CONTINUED WITH
MOLECULAR ORIENTATION PROCESS

# FIG.6

(A)

(B)

EP 3 677 408 B1

# FIG.7

PROCESS FOR FORMING
ORIENTATION FILM

PROCESS FOR FORMING LAYERS

(A) APPLY ORIENTATION FILM
P71
31(3)
1

(D) FORM LAYER
P72
21(2)
32(3)
1

(B) PERFORM PREBAKING AND BURNING
32(3)
1

(E)
21(2)
32(3)
1

(C)
32(3)
1

PERFORM REORIENTATION (HEATING)
23(2)
32(3)
(F)
1

RE-PERFORM ORIENTATION
FILM APPLICATION PROCESS 31(3)
P73
21(2)(23(2))
32(3)
(G)
1

FIG. 8

# FIG.9

PROCESS FOR FORMING
ORIENTATION FILM

PROCESS FOR FORMING LAYERS

(A)  APPLY ORIENTATION FILM
P91                    31(3)

PERFORM PREBAKING AND BURNING

(B)                          32(3)

PERFORM MOLECULAR
ORIENTATION PROCESS
                  RUBBING METHOD
32(3)    P92              62-C
                  Q9      33(3)

(C)                          1

RE-PERFORM ORIENTATION
FILM APPLICATION PROCESS
    P94              31(3)

33(3)                21(2)(23(2))

(G)                          1

TO BE CONTINUED WITH
MOLECULAR ORIENTATION PROCESS

(D)  FORM LAYER    21(2)   33(3)
     P93

(E)                21(2)   33(3)

PERFORM REORIENTATION (HEATING)
                          23(2)
                          33(3)

(F)                          1

# FIG.10

AZOBENZENE

trans-azobenzene

(A)

cis-azobenzene

(B)

# FIG.11

# FIG.12

PROCESS FOR FORMING ORIENTATION FILM　　PROCESS FOR FORMING LAYERS　　PROCESS FOR ORIENTING MOLECULES

(A) APPLY ORIENTATION FILM
P121　31(3)
1

PERFORM PREBAKING AND BURNING

(B) 32(3)
1

(C) 32(3)
1

RE-PERFORM ORIENTATION
FILM APPLICATION PROCESS 31(3)
P124　24(2)(25(2))
32(3)

(J) 1

(D) FORM LAYER
P122　21(2)　32(3)
1

(E) 21(2)　32(3)
1

PERFORM REORIENTATION
(HEATING)

(F) 23(2)　32(3)
1

PHOTO-ORIENTATION

(G) 21(2)　P123　24(2)　32(3)
1

(H) 24(2)　32(3)
1

PERFORM REORIENTATION
(HEATING)

(I) 25(2)　32(3)
1

EP 3 677 408 B1

# FIG.13

(A)

(B)

EP 3 677 408 B1

# FIG.14

PROCESS FOR FORMING LAYERS

PROCESS FOR ORIENTING MOLECULES

(A)

P141        21(2)

(B)        PHOTO-ORIENTATION

P142        21(2)        22(2)        1

(C)        P143        21(2)

22(2)        1

(D)        PHOTO-ORIENTATION

P144        21(2)        22(2)

22(2)        1

(E)        P145        21(2)

22(2)        22(2)        1

(F)        PHOTO-ORIENTATION

P146        21(2)        22(2)

22(2)        22(2)        1

FIG.15

(A)                UV(270nm)                (B)

# FIG.16

(A)

65-1  Q16  45-1

551

451

45-2

(B)

452

552

653

55-3

853

(C)

45-3

553

453

R16

854-1  854

hν

55-4

854B

854-2

(D)

654

45-4

454  554

# FIG.17

EP 3 677 408 B1

PROCESS FOR FORMING ORIENTATION FILM    PROCESS FOR FORMING LAYERS    PROCESS FOR ORIENTING MOLECULES

PHOTO-ORIENTATION

(A) APPLY ORIENTATION FILM    31(3)
P171

(D) FORM LAYER    21(2)
P173    33(3)

(G) 23(2)    P174    24(2)
33(3)

PERFORM PREBAKING AND BURNING

(B)    32(3)    1

(E)    21(2)    33(3)    1

(H)    24(2)    33(3)    1

PERFORM MOLECULAR
ORIENTATION PROCESS

PERFORM REORIENTATION
(HEATING)

PERFORM REORIENTATION
(HEATING)

RUBBING METHOD
32(3)    P172    65-C    Q17    33(3)

(C)    1

(F)    23(2)    33(3)    1

(I)    25(2)    33(3)    1

RE-PERFORM ORIENTATION
FILM APPLICATION PROCESS 31(3)
P175    24(2)(25(2))
33(3)

(J)    1

TO BE CONTINUED WITH
MOLECULAR ORIENTATION PROCESS

# FIG.18

(A)　　　　　　　　　　　　(B)

FIG.19

PROCESS FOR FORMING LAYERS

PROCESS FOR
ORIENTING MOLECULES

(A)

P191        21(2)

(B)

PHOTO-ORIENTATION

P192

21(2)

22(2)

1

(C)

P193        21(2)

22(2)

1

(D)

PHOTO-ORIENTATION

P194

21(2)

22(2)

22(2)

1

# FIG.20

# FIG.21

PROCESS FOR FORMING ORIENTATION FILM | PROCESS FOR FORMING LAYERS | PROCESS FOR ORIENTING MOLECULES

(A) APPLY ORIENTATION FILM
P211    31(3)

PERFORM PREBAKING AND BURNING
(IMIDIZED)

(B) 32(3)

PERFORM MOLECULAR
ORIENTATION PROCESS
RUBBING METHOD

(C) 32(3)   P212   67-C
Q21   33(3)

RE-PERFORM ORIENTATION
FILM APPLICATION PROCESS 31(3)
33(3)   P215
(J)   25(2)

TO BE CONTINUED WITH
MOLECULAR ORIENTATION PROCESS

(D) FORM LAYER
P213   21(2)
33(3)

(E) 21(2)
33(3)

PERFORM REORIENTATION
(HEATING)

(F) 23(2)
33(3)

(G) 23(2)   P214   PHOTO-ORIENTATION
24(2)
33(3)

(H) 24(2)
33(3)

PERFORM REORIENTATION
(HEATING)

(I) 25(2)
33(3)

EP 3 677 408 B1

# FIG.22

(A)

68-1  Q22  48-1
581
481

(B)

48-2
482
582

(C)

683 { 683-1
683-2
683-3
683-4

58-3

48-3
483  583

(D)

684
684-1
684-2
684-3
684-4

S22
hν

58-4

48-4
484  584

# F I G . 2 3

PROCESS FOR FORMING
ORIENTATION FILM

PROCESS FOR FORMING LAYERS

(A) APPLY ORIENTATION FILM

P231     31(3)

1

PERFORM PREBAKING AND BURNING
(IMIDIZED)

(B)     32(3)

1

PERFORM MOLECULAR
ORIENTATION PROCESS

RUBBING METHOD

P232     68-C

32(3)     Q23     33(3)

(C)     1

RE-PERFORM ORIENTATION
FILM APPLICATION PROCESS

P234     31(3)

33(3)     26(2)(27(2))

(G)     1

TO BE CONTINUED WITH
MOLECULAR ORIENTATION PROCESS

(D) FORM LAYER

P233     21(2)     33(3)

1

PERFORM UV
S23    IRRADIATION

26(2)

33(3)

(E)     1

PERFORM ANNEALING
(REORIENTATION PROCESS)

27(2)

33(3)

(F)     1

# F I G . 2 4

AZOBENZENE

trans-azobenzene
(A-1)

$h\nu$

$h\nu'$ or heat

cis-azobenzene
(A-2)

(A)

ABSORB LIGHT

T1

MOLECULAR MAJOR AXIS

TRANS-AZOBENZENE

(B)

LIGHT VIBRATION DIRECTION

LIGHT TRAVELING DIRECTION

(C)

CIS-AZOBENZENE

(D)

NOT ABSORB LIGHT

MOLECULAR MAJOR AXIS

TRANS-AZOBENZENE

T2

(E)

LIGHT VIBRATION DIRECTION

LIGHT TRAVELING DIRECTION

(F)

SINCE AZOBENZENE DOES NOT ABSORB LIGHT, TRANS-AZOBENZENE IS NOT CONVERTED INTO CIS-AZOBENZENE

(G)

EP 3 677 408 B1

# FIG.25

LIGHT VIBRATION DIRECTION (RANDOM LIGHT)

LIGHT TRAVELING DIRECTION

x

MOLECULAR MAJOR AXIS OF AZOBENZENE

y

(A)

LIGHT VIBRATION DIRECTION

LIGHT TRAVELING DIRECTION

x

MOLECULAR MAJOR AXIS OF AZOBENZENE

y

(B)

LIGHT VIBRATION DIRECTION (LINEARLY POLARIZED LIGHT)

LIGHT TRAVELING DIRECTION

x

MOLECULAR MAJOR AXIS OF AZOBENZENE

y

(C)

PLANE yz

LIGHT VIBRATION DIRECTION

LIGHT TRAVELING DIRECTION

x

MOLECULAR MAJOR AXIS OF AZOBENZENE

y

(D)

z

x

y

FIG. 26

LIGHT VIBRATION DIRECTION
(RANDOM LIGHT)

LIGHT TRAVELING DIRECTION

x

MOLECULAR MAJOR AXIS OF AZOBENZENE

y

(A)

LIGHT VIBRATION DIRECTION
(RANDOM LIGHT)

LIGHT TRAVELING DIRECTION

x

MOLECULAR MAJOR AXIS OF AZOBENZENE

y

(B)

LIGHT VIBRATION DIRECTION
(LINEARLY POLARIZED LIGHT)

LIGHT TRAVELING DIRECTION

x

MOLECULAR MAJOR AXIS OF AZOBENZENE

y

(C)

LIGHT VIBRATION DIRECTION
(LINEARLY POLARIZED LIGHT)

LIGHT TRAVELING DIRECTION

x

MOLECULAR MAJOR AXIS OF AZOBENZENE

y

PLANE x'

(D)

x  y  z

**REFERENCES CITED IN THE DESCRIPTION**

**Patent documents cited in the description**

- JP 2017025187 A
- JP 2015145449 A
- US 2004149684 A1
- US 5917980 A
- JP HEI634976 A
- JP 2011242743 A

**Non-patent literature cited in the description**

- **R.C. MOORE ; M.M. DENN ; G. MARRUCI.** *Polym. Mater, Sci. Eng.,* 1985, vol. 52, 84
- **J.S. MOORE ; S.I. STUPP.** *Macromolecules,* 1987, vol. 20, 282
- **K. FUKUHARA et al.** *Nature Communication,* 2014, vol. 5, 3320